(19) Europäisches Patentamt
European Patent Office
Office européen des brevets

(11) **EP 4 380 276 A1**

(12) **EUROPEAN PATENT APPLICATION**
published in accordance with Art. 153(4) EPC

(43) Date of publication:
**05.06.2024 Bulletin 2024/23**

(21) Application number: **22849542.0**

(22) Date of filing: **27.07.2022**

(51) International Patent Classification (IPC):
**H04W 72/04** *(2023.01)*     **H04W 48/10** *(2009.01)*
**H04W 72/12** *(2023.01)*

(52) Cooperative Patent Classification (CPC):
**H04W 48/10; H04W 56/00; H04W 72/04;
H04W 72/12; H04W 72/1273**

(86) International application number:
**PCT/JP2022/028941**

(87) International publication number:
**WO 2023/008481 (02.02.2023 Gazette 2023/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.07.2021  JP 2021125799**

(71) Applicants:
• **DENSO CORPORATION
Kariya-city, Aichi 448-8661 (JP)**

• **TOYOTA JIDOSHA KABUSHIKI KAISHA
Toyota-shi
Aichi 471-8571 (JP)**

(72) Inventors:
• **NAGANO, Tatsuki
Kariya-city, Aichi 448-8661 (JP)**
• **TAKAHASHI, Hideaki
Kariya-city, Aichi 448-8661 (JP)**

(74) Representative: **TBK
Bavariaring 4-6
80336 München (DE)**

(54) **COMMUNICATION DEVICE, BASE STATION, AND COMMUNICATION METHOD**

(57)     A communication apparatus (100) includes: a receiver (112) configured to receive a system information block from a base station (200), the system information block including one or a plurality of tracking reference signal (TRS) resource configurations for the communication apparatus (100) in a radio resource control (RRC) idle state or an RRC inactive state. The receiver (112) receives downlink control information (DCI) including a TRS field relating to availability of the one or the plurality of TRS resource configurations, from the base station (200). The system information block further includes: information for configuring a correspondence between each TRS resource configuration in the one or the plurality of TRS resource configurations and a bit of the TRS information field indicating availability of the TRS resource configuration; and information for configuring a validity duration for the TRS field.

FIG. 5

## Description

Cross-Reference to Related Applications

The present application is based on and claims the benefit of priority of Japanese Patent Application No. 2021-125799, filed on July 30, 2021, the entire contents of which are incorporated herein by reference.

Technical Field

The present disclosure relates to a communication apparatus, a base station, and a communication method used in a mobile communication system.

Background Art

In a mobile communication system conforming to a technical specification of 3GPP (registered trademark. hereinafter, the same shall apply) (3rd Generation Partnership Project) which is a mobile communication system standardization project, a channel state information reference signal (CSI-RS) and a tracking reference signal (TRS) are reference signals (RS) individually set for communication apparatuses in a radio resource control (RRC) connected state. The CSI-RS is a reference signal for performing channel quality indicator (CQI) measurement and Layer 3 measurement. The TRS is a reference signal for performing time and frequency synchronization (time and frequency tracking).

In 3GPP, standardization of a technology for reducing power consumption for a communication apparatus in an RRC idle state or an RRC inactive state is being discussed. In such a technology, it has been studied that a TRS resource (also referred to as a "TRS opportunity") configured for a communication apparatus in an RRC connected state can also be used in a communication apparatus in an RRC idle state or an RRC inactive state (see, for example, Non-Patent Literature 1). Specifically, a base station broadcasts a plurality of TRS resource configurations (TRS configurations) through a system information block (also referred to as "broadcast information").

The communication apparatus in the RRC idle state or the RRC inactive state receives the TRS by using the TRS resource configuration configured by the system information block, so that synchronization can be achieved without receiving an SSB (SS/PBCH Block), and the wake-up duration from establishment of synchronization to monitoring of paging can be shortened. Then, by not receiving the SSB, an increase in power consumption accompanying the reception of the SSB is suppressed.

Citation List

Non Patent Literature

Non Patent Literature 1: 3GPP Contribution RP-2105435, "Discussion on TRS/CSI-RS occasion(s) for idle/inactive UEs"

Summary of Invention

The TRS resource configuration is conventionally information transmitted toward a communication apparatus in an RRC connected state, and includes many configuration parameters, and thus has a large amount of information. Therefore, in a case where a plurality of TRS resource configurations is transmitted in the system information block, the information amount of the system information block can be enormous, and thus, there is a concern that the overhead increases and the utilization efficiency of the radio resource decreases.

Therefore, an object of the present disclosure is to provide a communication apparatus, a base station, and a communication method capable of suppressing a decrease in radio resource utilization efficiency even in a case where a plurality of TRS resource configurations is transmitted in a system information block.

The first embodiment of this disclosure provides a communication apparatus (100) including: a receiver (112) configured to receive a system information block from a base station (200), the system information block including one or a plurality of tracking reference signal (TRS) resource configurations for the communication apparatus (100) in a radio resource control (RRC) idle state or an RRC inactive state. The receiver (112) receives downlink control information (DCI) including a TRS field relating to availability of the one or the plurality of TRS resource configurations, from the base station (200). The system information block further includes: information for configuring a correspondence between each TRS resource configuration in the one or the plurality of TRS resource configurations and a bit of the TRS information field indicating availability of the TRS resource configuration; and information for configuring a validity duration for the TRS field.

The second embodiment of this disclosure provides a communication control method executed in a communication apparatus (100). The communication control method includes the steps of: receiving a system information block from a base station (200), the system information block including one or a plurality of tracking reference signal (TRS) resource configurations for the communication apparatus (100) in a radio resource control (RRC) idle state or an RRC inactive state; and receiving downlink control information (DCI) including a TRS field relating to availability of the one or the plurality of TRS resource configurations, from the base station (200). The system information block further includes: information for configuring a correspondence between each TRS resource configuration in the one or the plurality of TRS resource configurations and a bit of the TRS information field indicating availability of the TRS resource configuration; and information for configuring a validity duration for the TRS field.

The third embodiment of this disclosure provides a base station (200) including: a transmitter (211) configured to broadcast a system information block including one or a plurality of tracking reference signal (TRS) resource configurations for a communication apparatus (100) in a radio resource control (RRC) idle state or an RRC inactive state. The transmitter (211) transmits downlink control information (DCI) including a TRS field relating to availability of the one or the plurality of TRS resource configurations to the communication apparatus (100). The system information block further includes: information for configuring a correspondence between each TRS resource configuration in the one or the plurality of TRS resource configurations and a bit of the TRS information field indicating availability of the TRS resource configuration; and information for configuring a validity duration for the TRS field.

Brief Description of Drawings

Fig. 1 is a diagram illustrating a configuration of a mobile communication system according to an embodiment.
Fig. 2 is a diagram illustrating a configuration example of a protocol stack of the mobile communication system according to an embodiment.
Fig. 3 is a diagram illustrating an operation example of a UE in an RRC connected state.
Fig. 4 is a diagram illustrating an operation example of a UE in an RRC idle state or an RRC inactive state.
Fig. 5 is a diagram illustrating an operation example for the UE in the RRC idle state or the RRC inactive state to receive the TRS.
Fig. 6 is a diagram illustrating a configuration of the UE according to an embodiment.
Fig. 7 is a diagram illustrating a configuration of a base station according to an embodiment.
Fig. 8 is a diagram illustrating an operation related to information amount reduction of a system information block according to an embodiment.
Fig. 9 is a diagram illustrating a configuration example of a system information block according to an embodiment.
Fig. 10 is a diagram illustrating definitions of some parameters in a system information block according to an embodiment.
Fig. 11 is a diagram illustrating definitions of some parameters in a system information block according to an embodiment.
Fig. 12 is a diagram illustrating paging subgrouping.
Fig. 13 is a diagram illustrating an operation related to selection of TRS resource configuration according to an embodiment.
Fig. 14 is a diagram illustrating a configuration example of a system information block according to an embodiment.
Fig. 15 is a diagram illustrating an operation according to a modification.
Fig. 16 is a diagram illustrating a first configuration example of a system information block according to a modification.
Fig. 17 is a diagram illustrating a second configuration example of a system information block according to a modification.
Fig. 18 is a diagram illustrating an operation according to a modification.

Description of Embodiments

One or more embodiments of a mobile communication system will now be described with reference to the accompanying figures. Like elements in the various figures are denoted by like reference numerals.

(Configuration of Mobile Communication System)

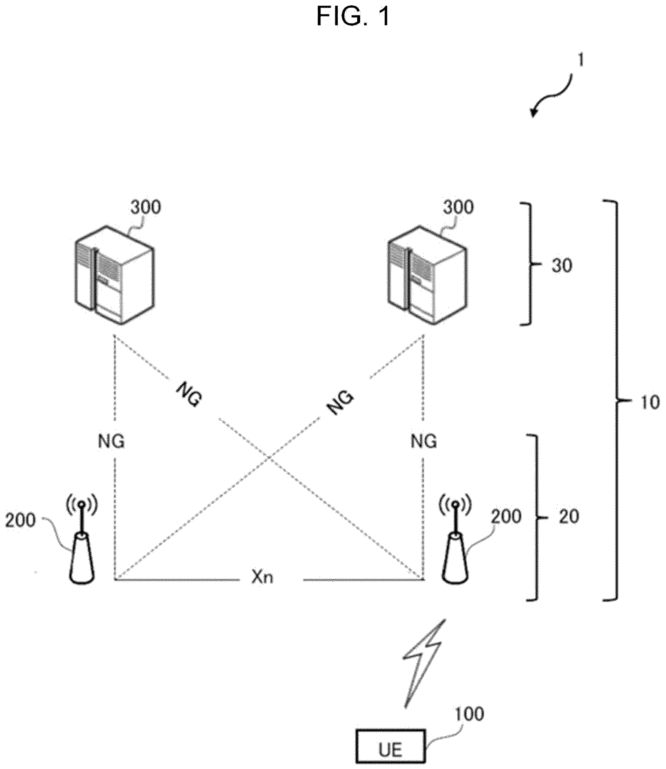

First, a configuration of a mobile communication system 1 according to one or more embodiments will be described with reference to Fig. 1. The mobile communication system 1 is, for example, a system conforming to a technical specification (TS) of 3rd Generation Partnership Project (3GPP). Hereinafter, as the mobile communication system 1, a description will be given, as an example, as to the 5th generation system (5GS) of the 3GPP standard, that is, a mobile communication system based on New Radio (NR).

The mobile communication system 1 includes a network 10 and a user equipment (UE) 100 that communicates with the network 10. The network 10 includes a next generation radio access network (NG-RAN) 20, which is a 5G radio access network, and a 5G core network (5GC) 30, which is a core network of 5G.

The UE 100 is an apparatus used by a user. The UE 100 is, for example, a mobile apparatus such as a mobile phone terminal such as a smartphone, a tablet terminal, a laptop computer, a communication module, or a communication card. The UE 100 may be a vehicle (for example, a car or a train) or an apparatus provided in the vehicle. The UE 100 may be a transport body other than a vehicle (for example, a ship or an airplane) or an apparatus provided in the transport body. The UE 100 may be a sensor or an apparatus provided in the sensor. The UE 100 may be referred to as another name such as a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit.

The NG-RAN 20 includes a plurality of base stations 200. Each of the base stations 200 manages at least one cell. A cell forms a minimum unit of a communication area. One cell belongs to one frequency (a carrier frequency) and is formed by one component carrier. The term "cell" may represent a radio communication resource, and may also represent a communication target of the UE 100. Each base station 200 can perform radio communication with the UE 100 existing in its own cell. The base station 200 communicates with the UE 100 by using a protocol stack of the RAN. The base station 200 provides NR user plane and control plane protocol terminations towards the UE 100 and is connected to the 5GC 30 via an NG interface. Such an NR base station 200 may be referred to as a gNodeB (gNB).

The 5GC 30 includes a core network apparatus 300. The core network apparatus 300 includes, for example, an access and mobility management function (AMF) and/or a user plane function (UPF). The AMF performs mobility management of the UE 100. The UPF provides a function specialized for user plane processing. The AMF and the UPF are connected to the base station 200 via the NG interface.

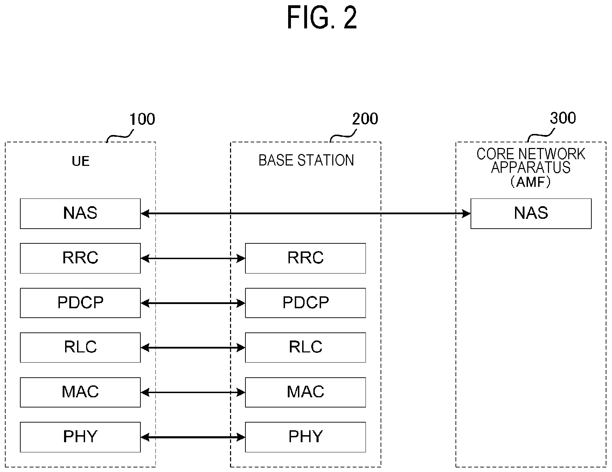

Next, a configuration example of a protocol stack in the mobile communication system 1 according to one or more embodiments will be described with reference to Fig. 2.

A protocol of a radio section between the UE 100 and the base station 200 includes a physical (PHY) layer, a medium access control (MAC) layer, a radio link control (RLC) layer, a packet data convergence protocol (PDCP) layer, and a radio resource control (RRC) layer.

The PHY layer performs encoding and decoding, modulation and demodulation, antenna mapping and demapping, and resource mapping and demapping. Data and control information are transmitted between the PHY layer of the UE 100 and the PHY layer of the base station 200 via a physical channel.

The physical channel includes a plurality of orthogonal frequency division multiplexing (OFDM) symbols in the time domain and a plurality of subcarriers in the frequency domain. One subframe includes a plurality of OFDM symbols in the time domain. A resource block is a resource allocation unit, and includes a plurality of OFDM symbols and a plurality of subcarriers. A frame can be composed of 10 ms, and can include 10 subframes composed of 1 ms. A number of slots corresponding to a subcarrier spacing may be included in the subframe.

Among the physical channels, a physical downlink control channel (PDCCH) plays a central role for purposes such as, for example, downlink scheduling allocation, uplink scheduling grant, and transmission power control.

In the NR, the UE 100 can use a bandwidth narrower than a system bandwidth (that is, the bandwidth of the cell). The base station 200 configures, for the UE 100, a bandwidth part (BWP) including consecutive physical resource blocks (PRBs). The UE 100 transmits and receives data and a control signal in an active BWP. In the UE 100, for example, a maximum of four BWPs can be configured. The BWPs may have different subcarrier spacings or may have frequencies overlapping each other. In a case where a plurality of BWPs is configured for the UE 100, the base station 200 can designate which BWP is to be activated by control in downlink. As a result, the base station 200 can dynamically adjust a UE bandwidth according to the amount of data traffic of the UE 100 and the like, and can reduce the UE power consumption.

The base station 200 may configure, for example, a maximum of three control resource sets (CORESETs) for each of a maximum of four BWPs on a serving cell. The CORESET is a radio resource for control information to be received by the UE 100. A maximum of 12 CORESETs may be configured on the serving cell for the UE 100. Each CORESET has an index of 0 to 11. For example, the CORESET includes six resource blocks (PRB) and one, two, or three consecutive OFDM symbols in the time domain.

The MAC layer performs priority control of data, retransmission processing by a hybrid automatic repeat request (HARQ), a random access procedure, and the like. Data and control information are transmitted between the MAC layer of the UE 100 and the MAC layer of the base station 200 via a transport channel. The MAC layer of the base station 200 includes a scheduler. The scheduler determines uplink and downlink transport formats (transport block size and modulation and coding scheme (MCS)) and resources to be allocated to the UE 100.

The RLC layer transmits data to the RLC layer on a reception side using the functions of the MAC layer and the PHY layer. Data and control information are transmitted between the RLC layer of the UE 100 and the RLC layer of the base station 200 via a logical channel.

The PDCP layer performs header compression and decompression and encryption and decryption.

A service data adaptation protocol (SDAP) layer may be provided as an upper layer of the PDCP layer. The service data adaptation protocol (SDAP) layer performs mapping between an IP flow that is a unit in which a core network performs quality of service (QoS) control, and a radio bearer that is a unit in which an access stratum (AS) performs QoS control.

The RRC layer controls the logical channel, the transport channel, and the physical channel according to establishment, reestablishment, and release of the radio bearer. RRC signaling for various configurations is transmitted between the RRC layer of the UE 100 and the RRC layer of the base station 200. In a case where there is an RRC connection between the RRC of the UE 100 and the RRC of the base station 200, the UE 100 is in an RRC connected state. In a case where there is no RRC connection between the RRC of the UE 100 and the RRC of the base station 200, the UE 100 is in an RRC idle state. In a case where an RRC connection between the RRC of the UE 100 and the RRC of the base station 200 is suspended, the UE 100 is in an RRC inactive state.

A non-access stratum (NAS) layer located above the RRC layer performs session management and mobility management of the UE 100. NAS signaling is transmitted between the NAS layer of the UE 100 and the NAS layer of the core network apparatus 300 (AMF). Note that the UE 100 has an application layer and the like in addition to a protocol of a radio interface.

(Assumed Scenario)

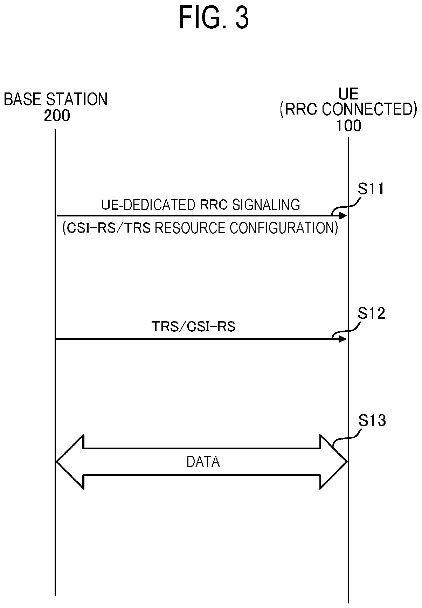

An assumed scenario in the mobile communication system 1 according to one or more embodiments will be described with reference to Figs. 3 to 5.

Fig. 3 illustrates an operation example of the UE 100 in an RRC connected state.

In step S11, the base station 200 individually configures the CSI-RS resource and/or the TRS resource for the UE 100. Specifically, the base station 200 transmits the UE-dedicated RRC signaling including the CSI-RS resource configuration parameter group and/or the TRS resource configuration parameter group to the UE 100.

For example, a parameter group for configuring TRS/CSI-RS is CSI-ResourceConfig/NZP-CSI-RS-Resource-Set, and includes bwp-ID, resourceType, trs-Info, repetition, powerControlOffset, powerControlOffsetSS, requencyDomainAllocation, firstOFDMSymbolInTimeDomain, Density, startingRB, nrofRBs, and subcarrierSpacing as each parameter (see 3GPP TS38.331). Here, trs-Info is a parameter indicating whether antenna ports of all NZP-CSI-RS resources in the CSI-RS resource set are the same. Here, the parameter group in the present embodiment may be referred to as a parameter set.

In step S12, the base station 200 transmits the CSI-RS and/or TRS to the UE 100 using the configured CSI-RS resource and/or TRS resource. The CSI-RS and the TRS are examples of downlink reference signals. The UE 100 receives the CSI-RS and/or the TRS. The UE 100 performs CQI measurement and Layer 3 measurement by the CSI-RS. The UE 100 performs time and frequency synchronization by the TRS.

In step S13, the base station 200 and the UE 100 perform data communication.

As described above, the CSI-RS resources and/or the TRS resources are individually configured for the UE 100 in the RRC connected state in the UE 100.

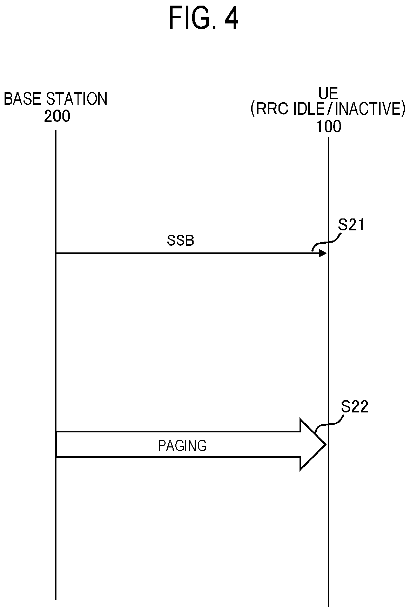

Fig. 4 illustrates an operation example of the UE 100 in the RRC idle state or the RRC inactive state.

The UE 100 in the RRC idle state or the RRC inactive state monitors Paging from the base station 200. Specifically, the UE 100 checks whether there is Paging addressed to the UE 100 by receiving a physical downlink control channel (PDCCH) from the base station 200. For example, the UE 100 may receive the paging message by receiving (decoding) downlink control information (DCI), to which a CRC (Cyclic Redundancy Check) parity bit scrambled by a P-RNTI (Paging Radio Network Temporary Identifier) is added on the PDCCH. Here, the base station 200 may configure the P-RNTI for the UE 100. In addition, the DCI may be a DCI format used for scheduling of a physical downlink shared channel (PDSCH). That is, the paging message may be transmitted in the PDSCH. Here, the DCI, to which the CRC parity bit scrambled by the P-RNTI is added, is also referred to as paging DCI. Here, the UE 100 intermittently monitors Paging by using discontinuous reception (DRX) in order to reduce power consumption. Such a cycle of monitoring Paging is referred to as a DRX cycle. In addition, a frame in which the UE 100 should monitor Paging is referred to as a paging frame (PF), and a subframe in which the UE 100 should monitor Paging among the PF is referred to as a paging occasion (PO: Paging Occasion).

In step S21, the base station 200 transmits the SSB to the UE 100. The SSB is another example of the downlink reference signal. The SSB includes a primary synchronization signal (PSS), a secondary synchronization signal (SSS), a PBCH (Physical Broadcast Channel), and a demodulation reference signal (DMRS). For example, the SSB may be composed of four consecutive OFDM symbols in the time domain. In addition, the SSB may be composed of 240 consecutive subcarriers (that is, 20 resource blocks) in the frequency domain. The PBCH is a physical channel that carries a master information block (MIB). The UE 100 performs time and frequency synchronization by receiving the SSB.

In step S22, the UE 100 monitors and receives Paging in the PO. Note that the UE 100 maintains the state of waking up from the reception of the SSB in step S21 to the PO. Therefore, as the time from the reception timing of the SSB to the timing of the PO is longer, the wake-up duration becomes longer, and the power consumption of the UE 100 increases.

In 3GPP, standardization of a technology for reducing power consumption for the UE 100 in the RRC idle state or the RRC inactive state is being discussed. In such a technology, it has been studied that a TRS resource (also referred to as a "TRS opportunity") configured for the UE 100 in the RRC connected state can also be used in the UE 100 in the RRC idle state or the RRC inactive state. Specifically, the base station 200 broadcasts a plurality of TRS resource configurations (TRS configurations) through a system information block (also referred to as "broadcast information"). Here, in the present embodiment, the TRS resource configuration may include one or a plurality of parameters used to configure the CSI-RS resource and/or the TRS resource.

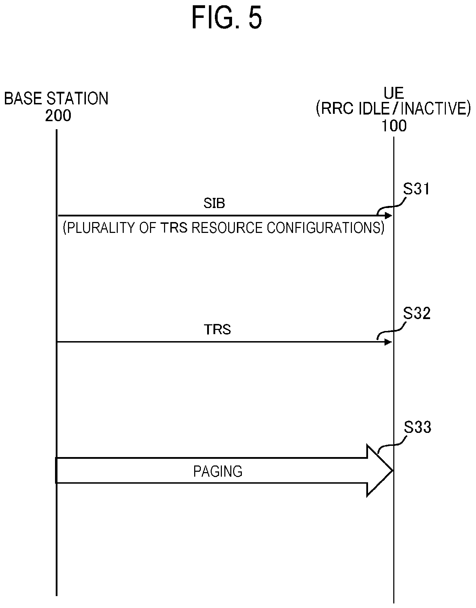

Fig. 5 illustrates an operation example for the UE 100 in the RRC idle state or the RRC inactive state to receive the TRS. Note that the TRS may be a CSI-RS used for tracking. That is, in the present embodiment, the TRS resource may include a CSI-RS resource.

In step S31, the base station 200 broadcasts a system information block (SIB) indicating a plurality of TRS resource configurations. Specifically, the base station 200 transmits a system information block including a plurality of TRS resource configuration parameter groups on a broadcast channel. Such a system information block may be an existing system information block other than the system information block type 1 (SIB 1), or may be a newly introduced type of system information block. The UE 100 receives the system information block and obtains a plurality of TRS resource configuration parameter groups.

Here, the TRS resource configuration parameter group for configuring the TRS for the UE 100 in the RRC idle state or the RRC inactive state may be only a part of the parameter group configured for the UE 100 in the RRC connected state. For example, the respective parameters ofbwp-Id, resource Type, repetition, aperiodicTriggeringOffset, trs-Info, powerControlOffset, nrofPorts, firstOFDMSymbolInTimeDomain2, cdm-Type, and density may not be set by the system information block, and fixed values defined in advance may be used. That is, these parameters may not be included in the system information block.

The base station 200 may notify the UE 100 of the TRS resource configuration in which the TRS is actually transmitted among the plurality of TRS resource configurations configured in the system information block as the available TRS resource configuration. Such notification may be performed by Layer 1 signaling (for example, DCI) or Layer 3 signaling (for example, the system information block). For example, the base station 200 may transmit information (hereinafter, also referred to as first information and availability indication) indicating whether the TRS is transmitted in the configured one or a plurality of TRS resources. That is, the first information may be used to indicate the TRS resource configuration (and/or TRS resource) available for transmission of the TRS. For example, the first information may be included in the paging DCI. Further, the first information may be included in the DCI to which the CRC parity bit scrambled by the RNTI (hereinafter also referred to as first RNTI) other than the P-RNTI is added. For example, the base station 200 may configure the first RNTI for the UE 100. That is, the Layer 1 signaling may include paging DCI and/or DCI to which a CRC parity bit scrambled by the first RNTI is added. In addition, the first information may be included in the Layer 3 signaling (for example, the system information block).

For example, a correspondence between each of the bits (bit fields) of the first information and one or a plurality of TRS resource configurations may be defined, and a value set in each of the bits of the first information may be used to indicate whether the TRS is transmitted on the TRS resource corresponding to the one or a plurality of TRS resource configurations. For example, if the bit of the first information is set to "1", it may indicate that the TRS is transmitted on the TRS resource based on the corresponding TRS resource configuration. That is, if the bit of the first information is set to "1", it may indicate that the corresponding TRS resource configuration (and/or TRS resource) is available for transmission of the TRS. In addition, if the bit of the first information is set to "0", it may indicate that the TRS is not transmitted on the TRS resource based on the corresponding TRS resource configuration. That is, if the bit of the first information is set to "0", it may indicate that the corresponding TRS resource configuration (and/or TRS resource) is unavailable for transmission of the TRS.

Here, as described below, one or a plurality of TRS resource configurations corresponding to each of the bits of the first information may be a dedicated TRS configuration parameter group. That is, a correspondence between each bit of the first information and one or a plurality of dedicated TRS configuration parameter groups may be defined, and a value set in each bit of the first information may be used to indicate whether the TRS is transmitted on the TRS resource corresponding to the one or the plurality of dedicated TRS configuration parameter groups.

Furthermore, for example, the correspondence between the value set in the bit (bit field) of the first information and one or a plurality of TRS resource configurations may be configured by the base station 200. For example, the base station 200 may include, in the system information block, information used for configuring the correspondence between the value set to a bit of the first information and one or a plurality of TRS resource configurations, and transmit the information. For example, a correspondence between a first value (for example, "01") set in a bit of the first information and one or a plurality of TRS resource configurations (for example, the first TRS resource configuration) may be set. In addition, a correspondence between a second value (for example, "10") set in a bit of the first information and one or a plurality of TRS resource configurations (for example, the second TRS resource configuration) may be configured. In addition, a correspondence between a third value (for example, "11") set in a bit of the first information and one or a plurality of TRS resource configurations (for example, the third TRS resource configuration) may be configured. Here, the plurality of TRS resource configurations may include all TRS resource configurations configured by the base station 200. That is, in a case where the first information set to the first value (for example, "01") is received, the UE 100 may assume that the TRS is transmitted in the TRS resource based on the corresponding one or a plurality of TRS resource configurations (for example, the first TRS resource configuration). Furthermore, in a case where the first information set to the second value (for example, "10") is received, the UE 100 may assume that the TRS is transmitted in the TRS resource based on the corresponding one or a plurality of TRS resource configurations (for example, the second TRS resource configuration). Furthermore, in a case where the first information set to the third value (for example, "11") is received, the UE 100 may assume that the TRS is transmitted in the TRS resource based on the corresponding one or a plurality of TRS resource configurations (for example, the third TRS resource configuration).

Here, as described below, one or a plurality of TRS resource configurations corresponding to the values set in the bits of the first information may be a dedicated TRS configuration parameter group. That is, the correspondence between the value set in the bit (bit field) of the first information and one or a plurality of dedicated TRS configuration parameter groups may be configured by the base station 200.

In addition, the number of bits (bit length) of the first information may be determined based on the number of dedicated TRS configuration parameter groups configured by the base station 200.

In step S32, the base station 200 transmits the TRS. The UE 100 selects any TRS resource configuration (available TRS resource configuration) from one or a plurality of TRS resource configurations, and receives the TRS using the selected TRS resource configuration. For example, the UE 100 may select (determine) the TRS resource configuration available for the transmission of the TRS based on the first information. That is, the UE 100 may select (determine) whether the TRS is transmitted on the configured TRS resource based on the first information. The UE 100 can perform time and frequency synchronization by receiving the TRS without receiving the SSB.

In step S33, the UE 100 monitors and receives Paging in the PO. Note that the UE 100 maintains the state of waking up from the reception of the TRS in step S31 to the PO. In a case where the time from the reception timing of the TRS to the timing of the PO is short, the wake-up duration is shortened, and the power consumption of the UE 100 is reduced. In addition, since the UE 100 does not receive the SSB, the power consumption accompanying the reception of the SSB can be reduced.

However, in a case where a plurality of TRS resource configurations is transmitted in the system information block in step S31, the information amount of the system information block can be enormous, and thus, there is a concern that the overhead increases and the utilization efficiency of the radio resource decreases. In particular, since the system information block is periodically transmitted broadcast information, utilization efficiency of radio resources may be greatly reduced. In one or more embodiments to be described below, an operation for reducing an information amount of a system information block that transmits a plurality of TRS resource configurations will be described.

In addition, the UE 100 that has received the system information block selects any TRS resource configuration (available TRS resource configuration) from the one or plurality of TRS resource configurations, and receives the TRS using the selected TRS resource configuration. However, how the UE 100 selects the TRS resource configuration is not clear, and there is a concern that the selection of the TRS resource configuration in the UE 100 cannot be appropriately performed. In one or more embodiments to be described below, an operation for appropriately selecting the TRS resource configuration will be described.

(Configuration of Communication Apparatus)

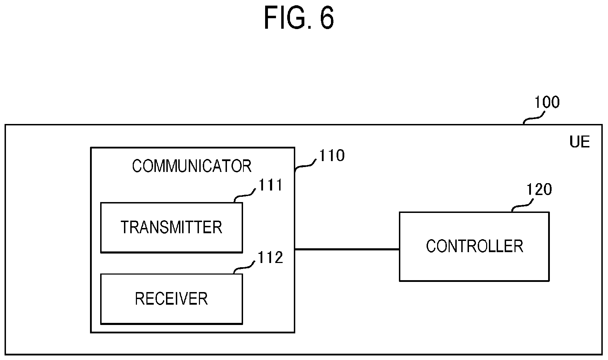

Next, a configuration example of the UE 100 according to one or more embodiments will be described with reference to Fig. 6. The UE 100 includes a communicator 110 and a controller 120.

The communicator 110 performs radio communication with the base station 200 by transmitting and receiving a radio signal to and from the base station 200. The communicator 110 includes at least one transmitter 111 and at least one receiver 112. The transmitter 111 and the receiver 112 may include a plurality of antennas and a radio frequency (RF) circuit. The antenna converts a signal into a radio wave and emits the radio wave into space. Furthermore, the antenna receives a radio wave in space and converts the radio wave into a signal. The RF circuit performs analog processing of a signal transmitted and received via the antenna. The RF circuit may include a high frequency filter, an amplifier, a modulator, a low pass filter, and the like.

The controller 120 performs various types of control in the UE 100. The controller 120 controls communication with the base station 200 via the communicator 110. The operation of the UE 100 described above and described later may be an operation under the control of the controller 120. The controller 120 may include at least one processor capable of executing a program and a memory that stores the program. The processor may execute the program to perform the operation of the controller 120. The controller 120 may include a digital signal processor that executes digital processing of a signal transmitted and received via the antenna and the RF circuit. The digital processing includes processing of the protocol stack of the RAN. The memory stores the program executed by the processor, a parameter related to the program, and data related to the program. The memory may include at least one of a read only memory (ROM), an erasable programmable read only memory (EPROM), an electrically erasable programmable read only memory (EEPROM), a random access memory (RAM), or a flash memory. All or part of the memory may be included in the processor.

In the UE 100 configured as described above, the controller 120 acquires the system information block indicating the plurality of TRS resource configurations from the base station 200 in the RRC idle state or the RRC inactive state. The receiver 112 receives the TRS from the base station 200 using the TRS resource configuration selected from the plurality of TRS resource configurations. The controller 120 performs time and frequency synchronization (time and frequency tracking) in the downlink using the TRS.

In one or more embodiments, the system information block includes, as separate information elements, a shared TRS configuration parameter group for two or more TRS resource configurations, and a dedicated TRS configuration parameter group that may have a different value for each TRS resource configuration. By defining such a shared TRS configuration parameter group as one information element, it is possible to combine two or more parameters having the same value among two or more TRS resource configurations into one. That is, parameters signaled redundantly can be reduced. Therefore, even in a case where a plurality of TRS resource configurations is transmitted in the system information block, the overhead is reduced, and a decrease in radio resource utilization efficiency is suppressed.

In one or more embodiment, the system information block includes condition information specifying a condition under which the UE 100 can select the TRS resource configuration for each TRS resource configuration. As a result, the UE 100 can appropriately select the TRS resource configuration to be applied to the TRS reception from the plurality of TRS resource configurations based on the condition information. Therefore, even in a case where a plurality of TRS resource configurations is transmitted in the system information block, selection of the TRS resource configurations can be appropriately executed.

(Configuration of Base Station)

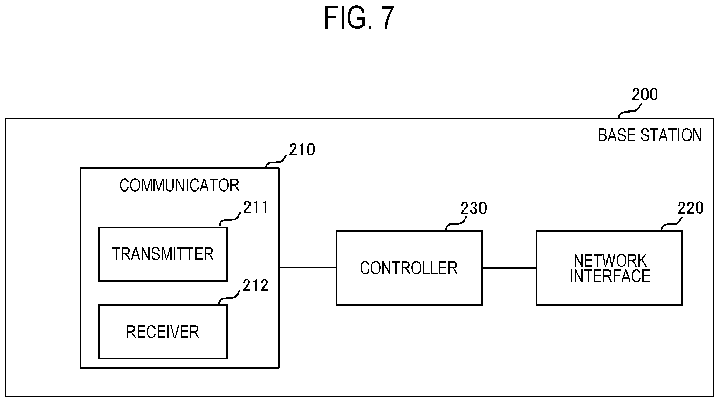

Next, a configuration of the base station 200 according to one or more embodiments will be described with reference to Fig. 7. The base station 200 includes a communicator 210, a network interface 220, and a controller 230.

For example, the communicator 210 receives a radio signal from the UE 100 and transmits a radio signal to the UE 100. The communicator 210 includes at least one transmitter 211 and at least one receiver 212. The transmitter 211 and the receiver 212 may include an RF circuit. The RF circuit performs analog processing of a signal transmitted and received via the antenna. The RF circuit may include a high frequency filter, an amplifier, a modulator, a low pass filter, and the like.

The network interface 220 transmits and receives a signal to and from a network. The network interface 220 receives, for example, a signal from a neighboring base station connected via an Xn interface, which is an interface between base stations, and transmits the signal to the neighboring base station. In addition, the network interface 220 receives, for example, a signal from the core network apparatus 300 connected via the NG interface, and transmits the signal to the core network apparatus 300.

The controller 230 performs various types of control in the base station 200. The controller 230 controls, for example, communication with the UE 100 via the communicator 210. Furthermore, the controller 230 controls, for example, communication with a node (for example, the neighboring base station and the core network apparatus 300) via the network interface 220. The operation of the base station 200 described above and described later may be an operation under the control of the controller 230. The controller 230 may include at least one processor capable of executing a program and a memory that stores the program. The processor may execute the program to perform the operation of the controller 230. The controller 230 may include a digital signal processor that executes digital processing of a signal transmitted and received via an antenna and an RF circuit. The digital processing includes processing of the protocol stack of the RAN. The memory stores the program executed by the processor, a parameter related to the program, and data related to the program. All or part of the memory may be included in the processor.

In the base station 200 configured as described above, the transmitter 211 transmits the TRS used by the UE 100 for time and frequency synchronization in the downlink and the system information block 400 indicating a plurality of TRS resource configurations.

In one or more embodiments, the system information block includes, as separate information elements, a shared TRS configuration parameter group for two or more TRS resource configurations, and a dedicated TRS configuration parameter group that may have a different value for each TRS resource configuration. As a result, as described above, even in a case where a plurality of TRS resource configurations is transmitted in the system information block, the overhead is reduced, and a decrease in radio resource utilization efficiency is suppressed.

In one or more embodiments, the system information block includes condition information specifying a condition under which the UE 100 can select the TRS resource configuration for each TRS resource configuration. As a result, as described above, even in a case where a plurality of TRS resource configurations is transmitted in the system information block, selection of the TRS resource configurations can be appropriately executed.

(Operation Related to Reduction in Information Amount of System Information Block)

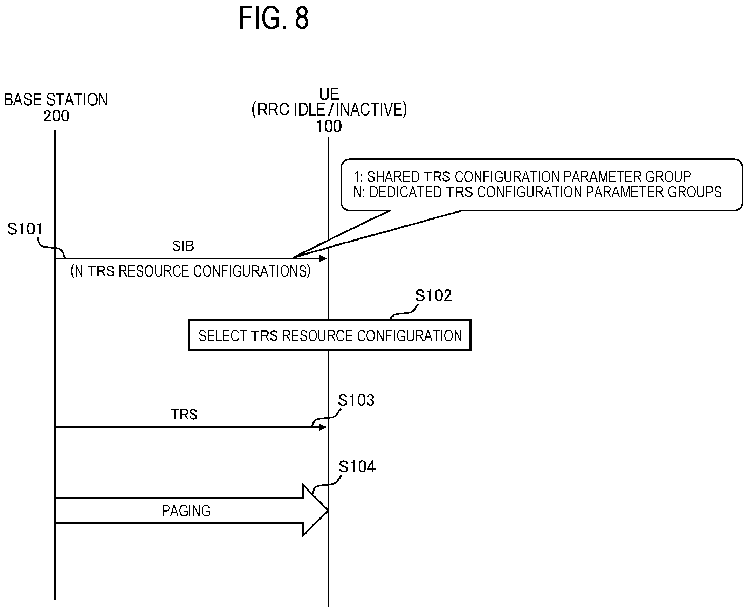

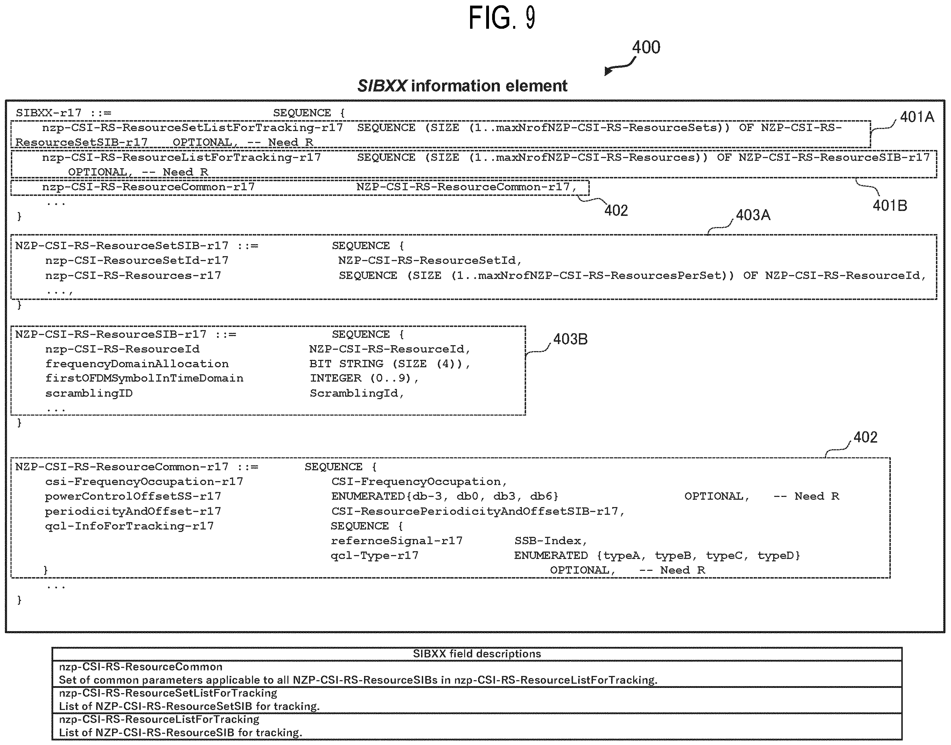

An operation related to information amount reduction of a system information block according to one or more embodiments will be described with reference to Figs. 8 and 9. This operation is based on the above-described configuration and operation. Fig. 8 illustrates such an operation. The UE 100 is in the RRC idle state or the RRC inactive state.

In step S101, the base station 200 (transmitter 211) broadcasts a system information block (SIB) indicating N ($N \geq 2$) TRS resource configurations. In one or more embodiments, the system information block includes, as separate information elements, one shared TRS configuration parameter group shared for N TRS resource configurations, and N dedicated TRS configuration parameter groups that may have different values for each TRS resource configuration. Here, the one shared TRS configuration parameter group shared for the N TRS resource configurations is a parameter group including one or a plurality of parameters used for configuring the TRS resource, and may be a parameter group commonly used for configuring the N TRS resources. Furthermore, the dedicated TRS configuration parameter group that can have a different value for each TRS resource configuration is a parameter group including one or a plurality of parameters used for configuring the TRS resource, and may be a parameter group individually used for each of the configurations of the N TRS resources.

For example, the shared TRS configuration parameter group includes at least one of a parameter indicating an occupation range of the TRS in the frequency direction, a parameter indicating a power offset of the TRS with respect to the synchronization signal, a parameter indicating periodicity and a time offset of the TRS, and a parameter related to QCL (Quasi Co-Location) of the TRS. Since these parameters have the same value among the N TRS resource configurations, the parameters signaled redundantly are reduced by collectively defining the N TRS resource configurations.

The dedicated TRS configuration parameter group includes at least one of a parameter indicating the allocation of the TRS in the frequency direction, a parameter indicating the allocation of the TRS in the time direction, and a parameter indicating the scrambling identifier of the TRS. These parameters may have different values among the N TRS resource configurations, and thus are individually defined for each of the N TRS resource configurations.

The UE 100 (receiver 112) receives the system information block from the base station 200. Then, the UE 100 (controller 120) acquires one shared TRS configuration parameter group and N dedicated TRS configuration parameter groups from the received system information block.

In step S102, the UE 100 (controller 120) selects one of the TRS resource configurations (available TRS resource configuration) from the N TRS resource configurations. The UE 100 (controller 120) acquires the overall TRS configuration parameter group corresponding to the selected TRS resource configuration by combining the dedicated TRS configuration parameter group corresponding to the selected TRS resource configuration and the shared TRS configuration parameter group. For example, the UE 100 (controller 120) may select (determine) one dedicated TRS configuration parameter group from the N dedicated TRS configuration parameter groups based on the first information (the value set in the bit of the first information). That is, the UE 100 (controller 120) may select the dedicated TRS configuration parameter group based on the first information, and specify the TRS resource configuration available for the transmission of the TRS from the selected dedicated TRS configuration parameter group and the shared TRS configuration parameter group.

That is, the first information may be applied to the dedicated TRS configuration parameter group. Further, the first information may not be applied to the shared TRS configuration parameter group. For example, the first information may be used to indicate a dedicated TRS configuration parameter group for specifying a TRS resource (that is, TRS resource configuration available for TRS transmission) on which the TRS is transmitted. For example, as described above, a correspondence between each (bit field) of the bits of the first information and one or a plurality of dedicated TRS configuration parameter groups may be defined, and the one or plurality of dedicated TRS configuration parameter groups may be indicated by using a value set to each bit of the first information. In addition, a correspondence between a value set to a bit (bit field) of the first information and one or a plurality of dedicated TRS configuration parameter groups may be configured by the base station 200, and the one or a plurality of dedicated TRS configuration parameter groups may be indicated by using a value set to each bit of the first information. Here, each of the one or plurality of dedicated TRS configuration parameter groups may be identified by an identifier (for example, NZP-CSI-RS-ResourceId to be described below).

In addition, the number of bits of the first information may be determined based on the number of dedicated TRS configuration parameter groups configured by the base station 200. For example, if two dedicated TRS configuration parameter groups are configured by the base station 200, the number of bits of the first information may be 2 bits. In addition, if four dedicated TRS configuration parameter groups are configured by the base station 200, the number of bits of the first information may be 4 bits. In this manner, by determining the number of bits of the first information based on the number of dedicated TRS configuration parameter groups configured by the base station 200, it is possible to reduce the information amount exchanged between the base station 200 and the UE 100.

In step S103, the UE 100 (receiver 112) receives the TRS from the base station 200 by using the dedicated TRS configuration parameter group corresponding to the TRS resource configuration selected in step S102 and the shared TRS configuration parameter group in combination. The UE 100 (controller 120) performs time and frequency synchronization (time and frequency tracking) in the downlink based on the received TRS. Note that the TRS may be transmitted from the base station 200 to another UE 100 in the RRC connected state.

Here, when the TRS resource configuration available for the transmission of the TRS is instructed using the first information, the validity duration for the instruction may be set. That is, when the transmission of the TRS in the TRS resource is instructed using the first information, a duration in which the transmission of the TRS in the TRS resource is valid may be set. For example, the base station 200 may transmit information for configuring (and/or instructing) the validity duration by including the information in the layer 3 signaling (for example, the system information block) and/or the layer 1 signaling (for example, DCI). Furthermore, the validity duration may be set as a valid time (for example, the value of the timer) or may be set as the number of paging cycles. For example, in a case where the validity duration is set and the first information indicating the transmission of the TRS in the TRS resource is received, the UE 100 may consider that the TRS is transmitted in the TRS resource during the validity duration. That is, in a case where the validity duration is set and the first information indicating the available TRS resource configuration is received, the UE 100 may consider that the available TRS resource configuration is valid during the validity duration.

Here, the UE 100 may start (or restart) the validity duration based on the reception of the first information (that is, the first information indicating the available TRS resource configuration) indicating the transmission of the TRS in the TRS resource. For example, the UE 100 may start (or restart) the validity duration when the value of the received first information is different from the value of the previously received first information. In addition, the UE 100 may continue the validity duration in a case where the value of the received first information is the same as the value of the previously received first information.

Here, as described above, the TRS resource configuration indicated by the first information may be a dedicated TRS configuration parameter group. That is, the validity duration may be applied to the dedicated TRS configuration parameter group. Further, the validity duration may not be applied to the shared TRS configuration parameter group. For example, the validity duration may be used to indicate a duration in which a dedicated TRS configuration parameter group for specifying a TRS resource (that is, TRS resource configuration available for TRS transmission) on which the TRS is transmitted is valid. For example, in a case where the validity duration is set and the first information indicating the dedicated TRS configuration parameter group is received, the UE 100 may consider that the TRS is transmitted in the TRS resource specified using the dedicated TRS configuration parameter group (and a shared TRS configuration parameter group) during the validity duration. That is, in a case where the validity duration is set and the first information indicating the available dedicated TRS configuration parameter group is received, the UE 100 may consider that the dedicated TRS configuration parameter group is valid during the validity duration. That is, the UE 100 may specify the TRS resource configuration available for the transmission of the TRS from the valid dedicated TRS configuration parameter group and the shared TRS configuration parameter group.

In step S104, the UE 100 monitors and receives Paging in the PO. Note that the UE 100 may maintain the state of waking up from the reception of the TRS in step S103 to the PO. In a case where the time from the reception timing of the TRS to the timing of the PO is short, the wake-up duration is shortened, and the power consumption of the UE 100 is reduced. In addition, since the UE 100 does not receive the SSB, the power consumption accompanying the reception of the SSB can be reduced.

As described above, the communication method used by the UE 100 that performs the time and frequency synchronization in the downlink using the TRS includes step S101 of acquiring the system information block 400 indicating the N TRS resource configurations from the base station 200 in the radio resource control RRC idle state or the RRC inactive state, and step S103 of receiving the TRS from the base station 200 using the TRS resource configuration selected from the N TRS resource configurations. The system information block includes, as separate information elements, one shared TRS configuration parameter group shared for N TRS resource configurations, and N dedicated TRS configuration parameter groups that may have different values for each TRS resource configuration.

Fig. 9 illustrates a configuration example of the system information block 400 according to one or more embodiments. Here, a configuration example in a case described in the RRC technical specification (TS38.331) will be described. It is assumed that the system information block 400 transmitting the TRS resource configuration is a newly introduced type of system information block (SIBXX), but a configuration example in which a new information element is added to an existing type of system information block may be used.

The system information block (SIBXX) 400 includes a configuration of a CSI-RS for tracking to be used for the UE 100 in the RRC idle state or the RRC inactive state.

Specifically, the system information block (SIBXX) 400 includes one of a first dedicated TRS configuration list (nzp-CSI-RS-ResourceSetListForTracking-r17) 401A and a second dedicated TRS configuration list (nzp-CSI-RS-ResourceListForTracking-r17) 401B. Note that "-r17" means information elements introduced in Release 17 of the 3GPP technical specification, but these information elements may be introduced in Release 18 or later.

The first dedicated TRS configuration list (nzp-CSI-RS-ResourceSetListForTracking-r17) 401A is an example of the N dedicated TRS configuration parameter groups. The first dedicated TRS configuration list (nzp-CSI-RS-ResourceSetListForTracking-r17) 401A is a list including N (1..maxNrofNZP-CSI-RS-ResourceSets) TRS resource set configurations (NZP-CSI-RS-ResourceSetSIB-r17) 403A. The TRS resource set configuration (NZP-CSI-RS-ResourceSetSIB-r17) 403A is a collection of a plurality of TRS resource configurations.

The second dedicated TRS configuration list (nzp-CSI-RS-ResourceListForTracking-r17) 401B is another example of the N dedicated TRS configuration parameter groups. The second dedicated TRS configuration list (nzp-CSI-RS-ResourceListForTracking-r17) 401B is a list including N (1..maxNrofNZP-CSI-RS-Resources) TRS resource configurations (NZP-CSI-RS-ResourceSIB-r17) 403B.

In addition, the system information block (SIBXX) 400 includes one shared TRS configuration parameter group (nzp-CSI-RS-ResourceCommon-r17/NZP-CSI-RS-ResourceCommon-r17) 402.

Each TRS resource set configuration (NZP-CSI-RS-ResourceSetSIB-r17) 403A included in the first dedicated TRS configuration list (nzp-CSI-RS-ResourceSetListForTracking-r17) 401A includes a TRS resource set identifier (nzp-CSI-ResourceSetId-r17/NZP-CSI-RS-ResourceSetId) and an identifier (NZP-CSI-RS-ResourceId) of each TRS resource configuration (NZP-CSI-RS-ResourceSIB-r17) included in the set. That is, one TRS resource set configuration is configured by the TRS resource configuration (NZP-CSI-RS-ResourceSIB-r17) indicated by each identifier (NZP-CSI-RS-ResourceId).

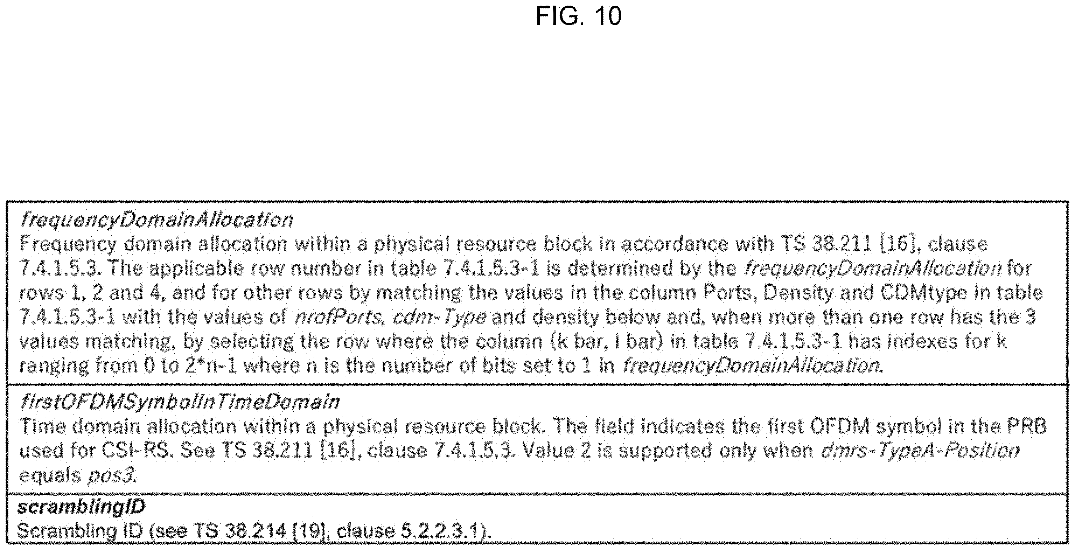

The TRS resource configuration (NZP-CSI-RS-ResourceSIB-r17) 403B includes an identifier (nzp-CSI-RS-ResourceId/NZP-CSI-RS-ResourceId) of the TRS resource configuration, a parameter (frequencyDomainAllocation) indicating the allocation of the TRS in the frequency direction, a parameter (firstOFDMSymbolInTimeDomain) indicating the allocation of the TRS in the time direction, and a parameter (scramblingID/ScramblingId) indicating the scrambling identifier of the TRS. Fig. 10 illustrates definitions of these parameters. The parameter (frequencyDomainAllocation) indicates frequency domain allocation in the physical resource block according to "7.4.1.5.3" of TS38.211, and for example, only "row 1" (4 bits) is used. The parameter (firstOFDMSymbolInTimeDomain) indicates the time domain allocation in the physical resource block, specifically, the first OFDM symbol of the physical resource block used for the CSI-RS, and is, for example, a value between "0" and "9". Note that while firstOFDMSymbolInTimeDomain indicates the first symbol in the slot, the second symbol in the same slot can be implicitly derived using a symbol index as firstOFDMSymbolInTimeDomain+4. The parameter (scramblingID/ScramblingId) indicates a scrambling identifier according to "5.2.2.3.1" of TS 38.214. These parameters are parameters necessary for separating each TRS (CSI-RS) from other TRSs (CSI-RS), and thus are included in the dedicated TRS configuration parameter group.

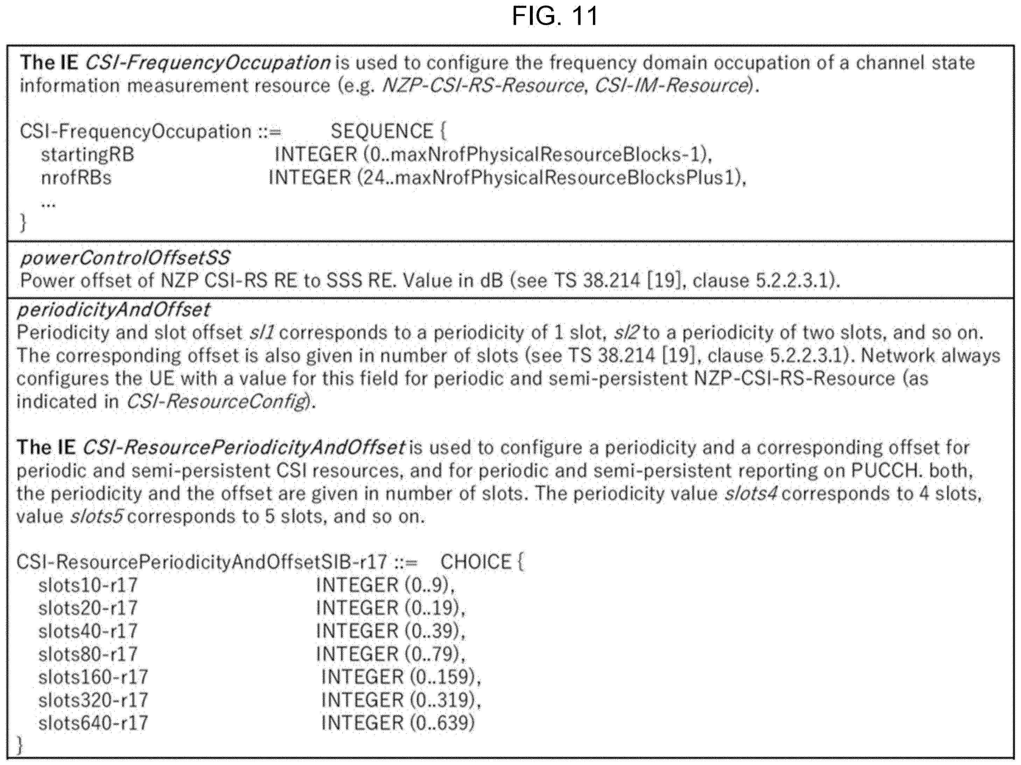

On the other hand, the shared TRS configuration parameter group (NZP-CSI-RS-ResourceCommon-r17) 402 includes a parameter (csi-FrequencyOccupation-r17/CSI-FrequencyOccupation) indicating the occupation range of the TRS in the frequency direction, a parameter (powerControlOffsetSS-r17) indicating the power offset of the TRS with respect to the synchronization signal, a parameter (periodicityAndOffset-r17/CSI-ResourcePeriodicityAndOffsetSIB-r17) indicating the periodicity and the time offset of the TRS, and a parameter (qcl-InfoForTracking-r17) related to the QCL of the TRS. Fig. 11 illustrates definitions of these parameters. The parameter (csi-FrequencyOccupation-r17/CSI-FrequencyOccupation) indicates an occupation range of the TRS in the frequency direction by a starting resource block number (startingRB) and the number of resource blocks (nrofRBs). The parameter (powerControlOffsetSS-r17) indicates the power offset of the TRS(NZP CSI-RS) with respect to the resource element (RE) of the secondary synchronization signal (SSS). The parameter (periodicityAndOffset-r17/CSI-ResourcePeriodicityAndOffsetSIB-r17) indicating the periodicity and the time offset of the TRS indicates the periodicity and the time offset of the TRS by the number of slots. The parameter (qcl-InfoForTracking-r17) related to the QCL of the TRS includes a parameter (referenceSignal-r17) indicating a downlink reference signal having a QCL relationship with the TRS and a parameter (qcl-Type-r17) indicating the QCL relationship. These parameters have the same value among the TRS resource configurations and are common.

(Operation Related to Selection of TRS resource configurations)

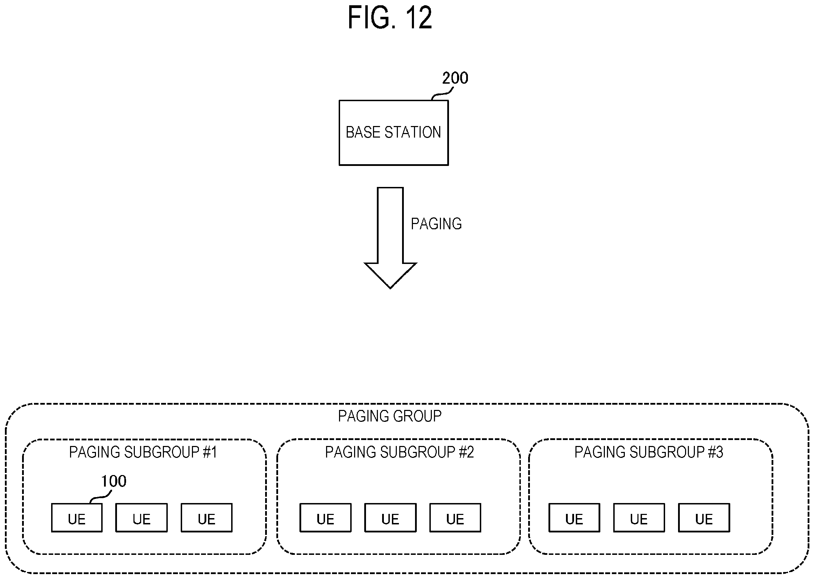

Prior to describing an operation related to selection of TRS resource configurations, paging subgrouping will be described with reference to Fig. 12. Here, in the present embodiment, the resource configuration may be replaced with a resource set configuration.

For paging reception, there is a mechanism called paging subgrouping in order to minimize the number of UEs 100 that wake up and reduce power consumption. The paging message transmitted by the base station 200 includes an identifier of each UE 100 called by the network. The UE 100 in the RRC idle state or the RRC inactive state wakes up at the PO to monitor and receive the paging message, and in a case where the identifier of the UE is included in the paging message received from the base station 200, the UE is regarded as being called, and performs an operation of transitioning to the RRC connected state, for example.

As described above, in the paging reception operation, all the UEs 100 to which the same PO is allocated wake up in the PO and perform paging monitoring. A UE group to which the same PO is allocated is referred to as a paging group. Here, since the UE 100 that is not actually called from the network also wakes up, extra power consumption occurs.

Therefore, each UE 100 allocated to the same PO is classified into a paging subgroup of a small unit, and a paging subgroup ID is allocated from the network to each UE 100. Fig. 12 illustrates an example of dividing a paging group into three paging subgroups with paging subgroup IDs "#1" to "#3". Although an example in which the number of UEs 100 belonging to each paging subgroup is 3 is illustrated, the number of UEs 100 belonging to each paging subgroup may be 1, 2, or 4 or more. The allocation of the paging subgroup ID to each UE 100 may be performed, for example, at the time of network registration of the UE 100. The network allocates a paging subgroup ID according to an identifier, a paging probability, a power consumption profile, and/or the like of each UE 100.

For example, prior to PO, the network (base station 200) notifies each UE 100 of the paging subgroup ID to which the UE 100 called in the paging message transmitted in the PO belongs. Only when the paging subgroup ID to which each UE 100 belongs is notified, each UE 100 wakes up at the PO and performs paging monitoring. As a result, since the UEs 100 belonging to some paging subgroups do not wake up in the PO, the occurrence of extra power consumption is suppressed.

In one or more embodiments, the paging subgroup ID allocated to the UE 100 in this way is used as a selection condition for selecting the TRS resource configuration.

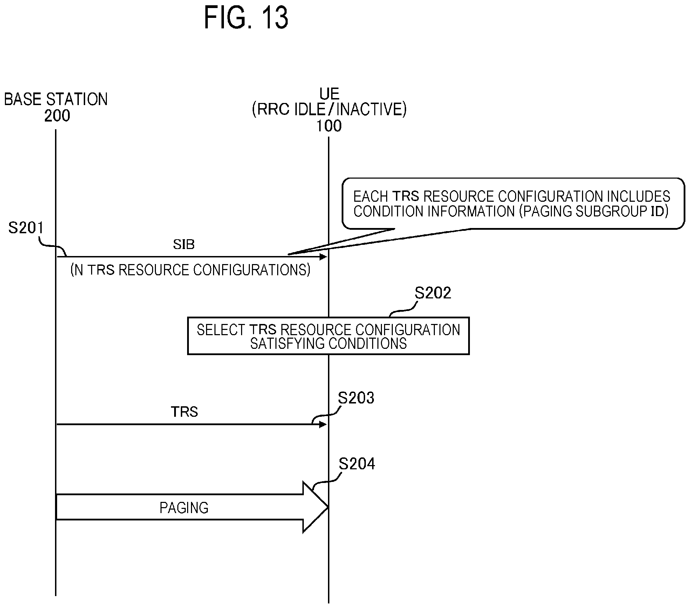

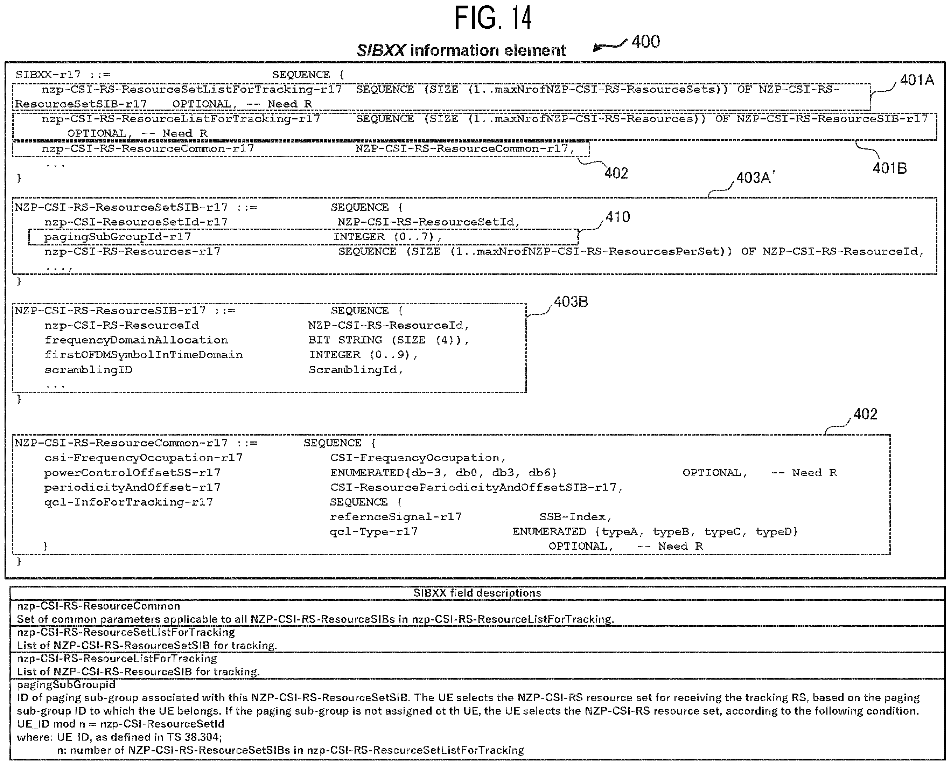

An operation related to selection of TRS resource configurations according to one or more embodiments will be described with reference to Figs. 13 and 14. This operation is based on the above-described configuration and operation. Fig. 13 illustrates such an operation. The UE 100 is in the RRC idle state or the RRC inactive state.

In step S201, the base station 200 (transmitter 211) broadcasts a system information block (SIB) indicating N ($N \geq 2$) TRS resource configurations. In one or more embodiments, the system information block includes condition information specifying a condition under which the UE 100 can select the TRS resource configuration for each TRS resource configuration.

For example, the condition information includes an identifier that can be allocated to the UE 100. The identifier may be a paging subgroup ID for identifying a UE group (paging subgroup) to be paged. That is, the system information block includes a paging subgroup ID for each TRS resource configuration. However, the identifier is not limited to the paging subgroup ID, and may be an identifier allocated in advance according to the characteristic and/or the state of the UE 100.

The UE 100 (receiver 112) receives the system information block from the base station 200. Then, the UE 100 (controller 120) acquires each TRS resource configuration and the paging subgroup ID (condition information) from the received system information block.

In step S202, the UE 100 (controller 120) selects the TRS resource configuration in which the condition indicated by the condition information is satisfied from the plurality of TRS resource configurations transmitted in the system information block. Specifically, the UE 100 (the controller 120) selects the TRS resource configuration (available TRS resource configuration) associated with the paging subgroup ID matching the allocation identifier (allocation paging subgroup ID) allocated to the UE itself from the N TRS resource configurations.

For example, it is assumed that the system information block includes a TRS resource configuration #1 associated with a paging subgroup ID "#1", a TRS resource configuration #2 associated with a paging subgroup ID "#2", and a TRS resource configuration #3 associated with a paging subgroup ID "#3". Then, in a case where the paging subgroup ID to which the UE 100 belongs is "#1", the TRS resource configuration #1 associated with the paging subgroup ID "#1" is selected.

In this manner, the UE 100 (controller 120) selects the TRS resource configuration associated with the paging subgroup ID in response to the matching between the allocation paging subgroup ID allocated to the UE and the paging subgroup ID in the system information block.

In step S203, the UE 100 (receiver 112) receives the TRS from the base station 200 using the TRS resource configuration selected in step S202. The UE 100 (controller 120) performs time and frequency synchronization (time and frequency tracking) in the downlink based on the received TRS. Note that the TRS may be transmitted from the base station 200 to another UE 100 in the RRC connected state.

In step S204, the UE 100 monitors and receives Paging in the PO. Note that the UE 100 may maintain the state of waking up from the reception of the TRS in step S203 to the PO. In a case where the time from the reception timing of the TRS to the timing of the PO is short, the wake-up duration is shortened, and the power consumption of the UE 100 is reduced. In addition, since the UE 100 does not receive the SSB, the power consumption accompanying the reception of the SSB can be reduced.

As described above, the communication method used by the UE 100 that performs the time and frequency synchronization in the downlink using the TRS includes step S201 of acquiring the system information block indicating the N TRS resource configurations from the base station 200 in the radio resource control RRC idle state or the RRC inactive state, and step S203 of receiving the TRS from the base station 200 using the TRS resource configuration selected from the N TRS resource configurations. The system information block includes condition information specifying a condition under which the UE 100 can select the TRS resource configuration for each TRS resource configuration.

In the TRS resource configuration selection operation as described above, the UE 100 may not have its own allocation identifier. For example, the UE 100 may not support paging subgrouping, or may support paging subgrouping but not be assigned with a paging subgroup ID. In such a case, the UE 100 (controller 120) may select the TRS resource configuration from among a plurality of TRS resource configurations transmitted in the system information block based on its own unique identifier.

For example, the UE 100 (controller 120) selects the TRS resource configuration (here, the TRS resource set identifier) using the following equation.

UE_ID mod (number of NZP-CSI-RS resource sets) = NZP-CSI-Rs resourse set ID

$$\text{UE\_ID} = \text{5G-S-TMSI mod 1024 (as defined in TS 38.304)}$$

Here, the "number of NZP-CSI-RS resource sets" is the number of TRS resource configurations (that is, "N") transmitted in the system information block. The 5G-S-TMSI is a unique identifier of the UE 100. As a result, one TRS resource configuration can be smoothly selected from a plurality of TRS resource configurations.

Fig. 14 illustrates a configuration example of the system information block 400 according to one or more embodiments. Here, differences from the configuration example of Fig. 9 will be described for the configuration example described in the RRC technical specification (TS38.331).

The system information block (SIBXX) 400 includes a configuration of a CSI-RS for tracking to be used for the UE 100 in the RRC idle state or the RRC inactive state. Specifically, the system information block (SIBXX) 400 includes one of a first dedicated TRS configuration list (nzp-CSI-RS-ResourceSetListForTracking-r17) 401A and a second dedicated TRS configuration list (nzp-CSI-RS-ResourceListForTracking-r17) 401B.

The first dedicated TRS configuration list (nzp-CSI-RS-ResourceSetListForTracking-r17) 401A is an example of the N dedicated TRS configuration parameter groups. The first dedicated TRS configuration list (nzp-CSI-RS-ResourceSetListForTracking-r17) 401A is a list including N (1..maxNrofNZP-CSI-RS-ResourceSets) TRS resource set configurations (NZP-CSI-RS-ResourceSetSIB-r17) 403A'. The TRS resource set configuration (NZP-CSI-RS-ResourceSetSIB-r17) 403A' is a collection of a plurality of TRS resource configurations.

The TRS resource set configuration (NZP-CSI-RS-ResourceSetSIB-r17) 403A' includes a paging subgroup ID (pagingSubGroupId-r17) as condition information 410 that specifies a condition under which the UE 100 can select the TRS resource set configuration. For example, the paging subgroup ID (pagingSubGroupId-r 17) is a value between "0" and "7". When its own allocation paging subgroup ID matches the paging subgroup ID (pagingSubGroupId-r17) in the TRS resource set configuration (NZP-CSI-RS-ResourceSetSIB-r17) 403A', The UE100 (controller 120) selects the TRS resource set configuration (NZP-CSI-RS-ResourceSetSIB-r17) 403A'.

The second dedicated TRS configuration list (nzp-CSI-RS-ResourceListForTracking-r17) 401B is another example of the N dedicated TRS configuration parameter groups. The second dedicated TRS configuration list (nzp-CSI-RS-ResourceListForTracking-r17) 401B is a list including N (1..maxNrofNZP-CSI-RS-Resources) TRS resource configurations (NZP-CSI-RS-ResourceSIB-r17) 403B. Instead of including the condition information 410 (pagingSubGroupId-r 17) in the TRS resource set configuration (NZP-CSI-RS-ResourceSetSIB-r17) 403A', the condition information 410 (pagingSubGroupId-r 17) may be included in the TRS resource configuration (NZP-CSI-RS-ResourceSIB-r17) 403B. In such a modification, when its own allocation paging subgroup ID matches the paging subgroup ID (pagingSubGroupId-r17) in the TRS resource configuration (NZP-CSI-RS-ResourceSIB-r17) 403B, the UE 100 (controller 120) selects the TRS resource configuration (NZP-CSI-RS-ResourceSIB-r17) 403B.

As described above, the system information block 400 includes the condition information 410 for each of the N dedicated TRS configuration parameter groups 403. That is, the system information block 400 includes the condition information 410 that specifies a condition under which the UE 100 can select the dedicated TRS configuration parameter group 403 for each dedicated TRS configuration parameter group 403. As a result, one dedicated TRS configuration parameter group 403 can be appropriately selected from the N dedicated TRS configuration parameter groups 403. In particular, in a case where the paging subgroup is subgrouped according to a characteristic of a certain service or traffic, the TRS configuration parameter can be optimized according to the characteristic.

(Modification of Configuration of System Information Block)

In the above-described embodiment, an example has been described in which the system information block includes one shared TRS configuration parameter group shared for N TRS resource configurations. However, the system information block may include a plurality of sets of shared TRS configuration parameter groups.

For example, when there is only one parameter (powerControlOffsetSS-r17) indicating the power offset of the TRS with respect to the synchronization signal or only one parameter (periodicityAndOffset-r17/CSI-ResourcePeriodicityAndOffsetSIB-r17) indicating the periodicity and the time offset of the TRS, it may be difficult to optimize the TRS configuration parameter according to the service used by the UE 100 and the characteristic and state of the UE 100. Therefore, a plurality of sets of the shared TRS configuration parameter groups are transmitted in the system information block, and each dedicated TRS configuration parameter group is associated with one set of the shared TRS configuration parameter groups. That is, in the system information block, each of the dedicated TRS configuration parameter groups 403 is associated with one set among the plurality of sets of the shared TRS configuration parameter group.

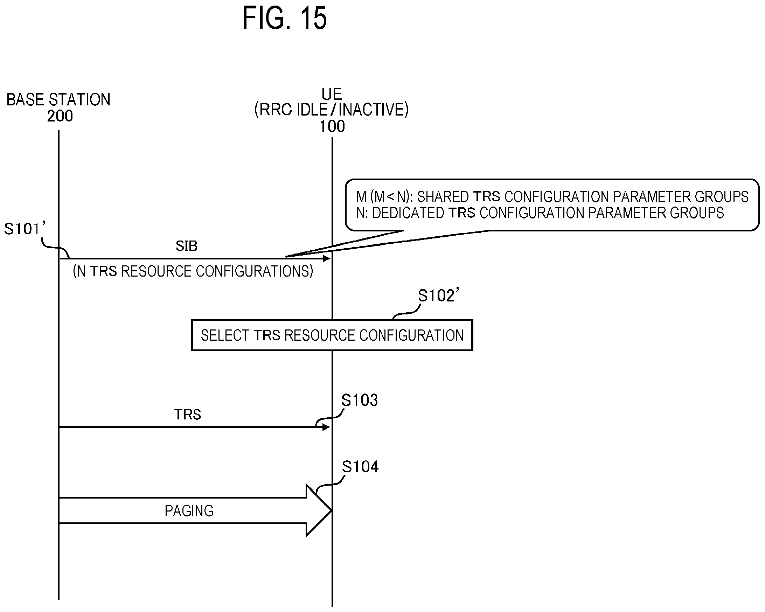

Fig. 15 illustrates an operation according to the present modification. The UE 100 is in the RRC idle state or the RRC inactive state.

In step S101', the base station 200 (transmitter 211) broadcasts a system information block (SIB) indicating N (N ≥ 2) TRS resource configurations. In the present modification, the system information block includes M (M < N) shared TRS configuration parameter groups and N dedicated TRS configuration parameter groups as separate information elements. Each of the M (M < N) shared TRS configuration parameter groups is associated with two or more dedicated TRS configuration parameter groups. The system information block may include the above-described condition information 410.

For example, a case where N = 6 and M = 3 will be described as an example. That is, the system information block includes six dedicated TRS configuration parameter groups (dedicated TRS configuration parameter groups #1 to #6). Here, the dedicated TRS configuration parameter groups #1 and #2 are associated with the shared TRS configuration parameter group #1, the dedicated TRS configuration parameter groups #3 and #4 are associated with the shared TRS configuration parameter group #2, and the dedicated TRS configuration parameter groups #5 and #6 are associated with the shared TRS configuration parameter group #3. In the shared TRS configuration parameter groups #1 to #3, for example, the parameter (powerControlOffsetSS-r17) indicating the power offset of the TRS with respect to the synchronization signal and the parameter (periodicityAndOffset-r17/CSI-ResourcePeriodicityAndOffsetSIB-r17) indicating the periodicity and the time offset of the TRS may be different from each other.

The UE 100 (receiver 112) receives the system information block from the base station 200. Then, the UE 100 (controller 120) acquires M shared TRS configuration parameter groups and N dedicated TRS configuration parameter groups from the received system information block.

In step S102', the UE 100 (controller 120) selects one of the TRS resource configurations (available TRS resource configuration) from the N TRS resource configurations. The UE 100 (controller 120) may select the TRS resource configuration based on the above-described condition information 410. The UE 100 (controller 120) acquires the overall TRS configuration parameter group corresponding to the selected TRS resource configuration by combining the dedicated TRS configuration parameter group corresponding to the selected TRS resource configuration and the shared TRS configuration parameter group corresponding to the selected TRS resource configuration.

The operations in steps S103 and S104 are similar to the operations in the above-described embodiment.

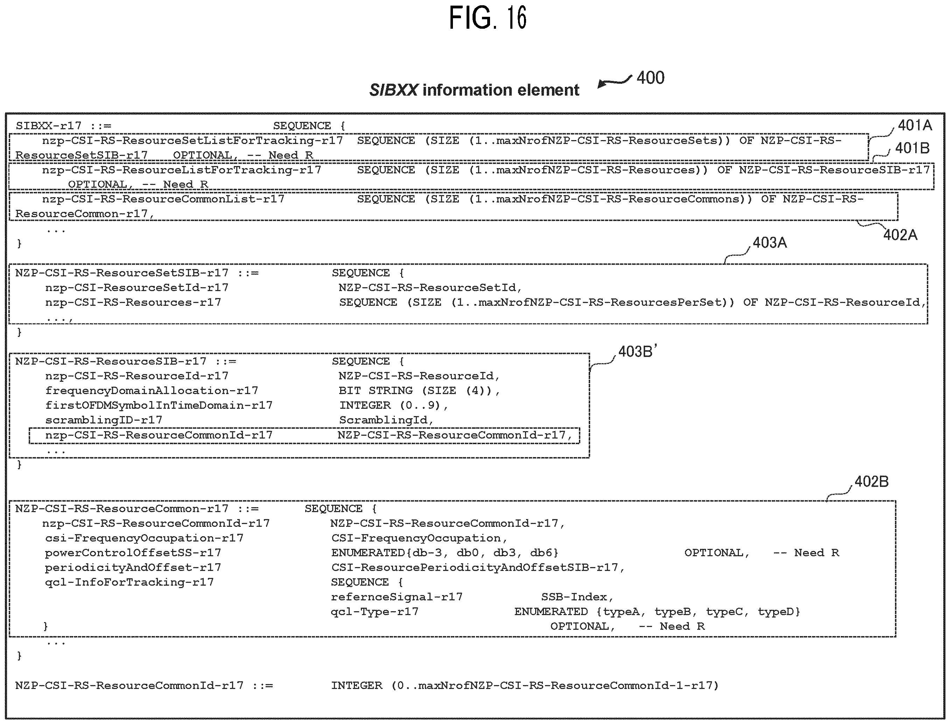

Fig. 16 illustrates a first configuration example of a system information block 400 according to the modification. Here, differences from the configuration example of Fig. 9 will be described for the configuration example described in the RRC technical specification (TS38.331).

In the present modification, the system information block (SIBXX) 400 includes a shared TRS configuration list (nzp-CSI-RS-ResourceCommonList-r17) 402A. The shared TRS configuration list (nzp-CSI-RS-ResourceCommonList-r17) 402A is a list including M (1..maxNrofNZP-CSI-RS-ResourceCommons) shared TRS configuration parameter groups (NZP-CSI-RS-ResourceCommon-r17) 402B.

Each shared TRS configuration parameter group (NZP-CSI-RS-ResourceCommon-r17) 402B includes an identifier (nzp-CSI-RS-ResourceCommonId-r17/NZP-CSI-RS-ResourceCommonId-r17) of the shared TRS configuration parameter group.

In addition, each TRS resource configuration (NZP-CSI-RS-ResourceSIB-r17) 403B' includes an identifier (nzp-CSI-RS-ResourceCommonId-r17/NZP-CSI-RS-ResourceCommonId-r17) of a shared TRS configuration parameter group (NZP-CSI-RS-ResourceCommon-r17) 402B associated with the TRS resource configuration.

When selecting one TRS resource configuration (NZP-CSI-RS-ResourceSIB-r17) 403B', the UE 100 (controller 120) specifies a shared TRS configuration parameter group (NZP-CSI-RS-ResourceCommon-r17) 402B having an identifier matching the identifier (nzp-CSI-RS-ResourceCommonId-r17/NZP-CSI-RS-ResourceCommonId-r17) included in the TRS resource configuration (NZP-CSI-RS-ResourceSIB-r17) 403B', and combines the TRS resource configuration (NZP-CSI-RS-ResourceSIB-r17) 403B' and the specified shared TRS configuration parameter group (NZP-CSI-RS-ResourceCommon-r17) 402B to acquire an overall TRS configuration parameter group.

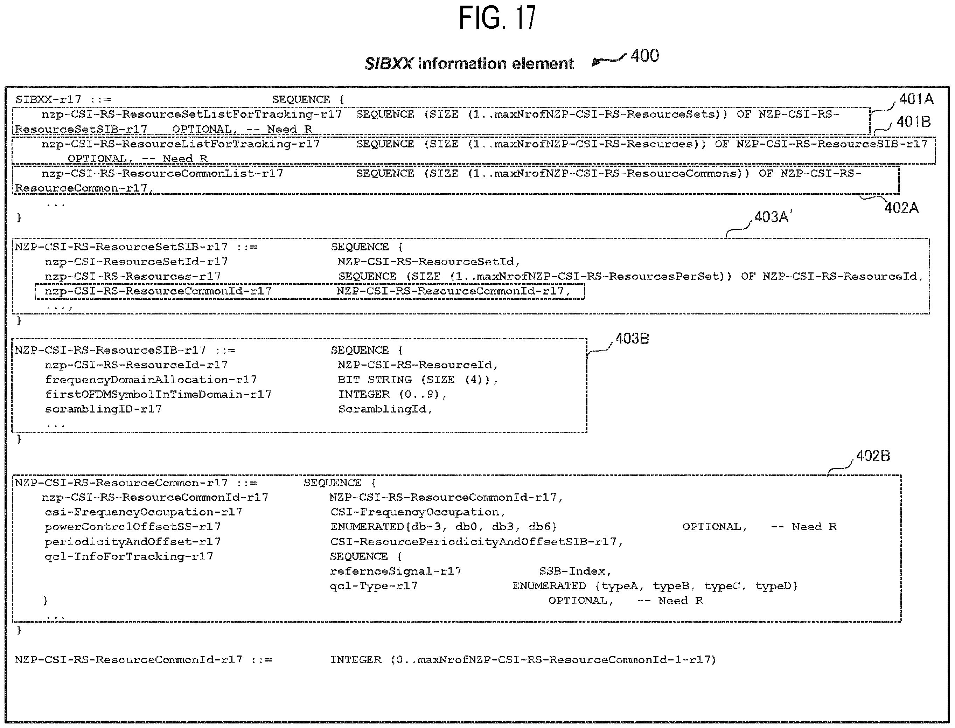

Fig. 17 illustrates a second configuration example of a system information block 400 according to the modification. In the second configuration example, each TRS resource set configuration (NZP-CSI-RS-ResourceSetSIB-r17) 403A' includes an identifier (nzp-CSI-RS-ResourceCommonId-r17/NZP-CSI-RS-ResourceCommonId-r17) of a shared TRS configuration parameter group (NZP-CSI-RS-ResourceCommon-r17) 402B associated with the TRS resource set configuration. That is, the shared TRS configuration parameter group (NZP-CSI-RS-ResourceCommon-r17) 402B to be applied to all the TRS resource configurations (NZP-CSI-RS-ResourceSIB-r17) 403B configured in the TRS resource set configuration (NZP-CSI-RS-ResourceSetSIB-r17) 403A' is designated with the ID thereof.

In a case where the UE 100 (controller 120) selects one TRS resource set configuration (NZP-CSI-RS-ResourceSetSIB-r17) 403A', based on the identifier (nzp-CSI-RS-ResourceCommonId-r17/NZP-CSI-RS-ResourceCommonId-r17) included in the TRS resource set configuration (NZP-CSI-RS-ResourceSetSIB-r17) 403A', the UE 100 (controller 120) specifies a shared TRS configuration parameter group (NZP-CSI-RS-ResourceCommon-r17) 402B to be combined with all the TRS resource configurations (NZP-CSI-RS-ResourceSIB-r17) 403B included in the TRS resource set configuration (NZP-CSI-RS-ResourceSetSIB-r17) 403A', and combines the TRS resource configuration (NZP-CSI-RS-ResourceSIB-r17) 403B and the specified shared TRS configuration parameter group (NZP-CSI-RS-ResourceCommon-r17) 402B to acquire an overall TRS configuration parameter group.

(Modification of TRS Resource Configuration Selection Operation)

In the above-described embodiment, an example of using the paging subgroup ID allocated to the UE 100 as the selection condition (condition information) for selecting the TRS resource configuration has been described. However, in addition to the paging subgroup ID or instead of the paging subgroup ID, the movement state and/or the reception state may be used as the selection condition (condition information).

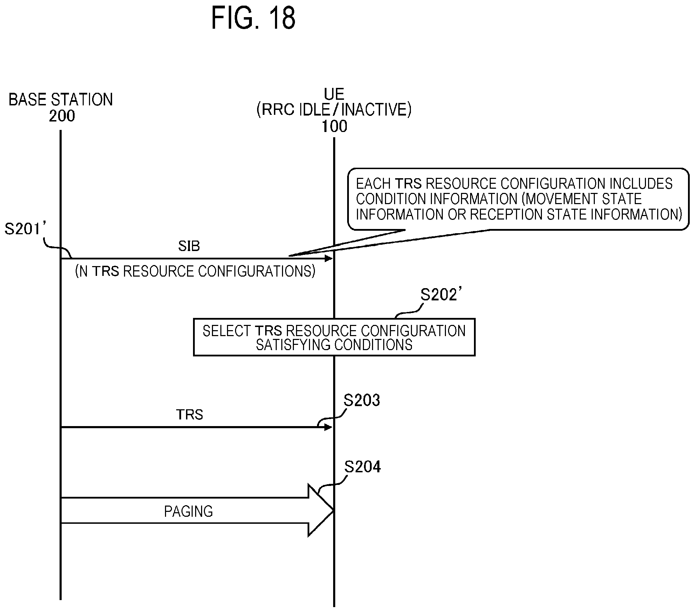

Fig. 18 illustrates an operation according to the present modification. The UE 100 is in the RRC idle state or the RRC inactive state.

The system information block (SIB) transmitted in step S201' may include movement state information indicating a movement state as condition information associated with each TRS resource configuration. The movement state information is information indicating UE mobility, and may be, for example, binary information such as moving/stationary, or multivalued information such as stationary/low-speed/medium-speed/high-speed. In step S202', when the movement state of the UE 100 (controller 120) matches the movement state indicated by the movement state information in the system information block, the UE selects the TRS resource configuration associated with the condition information 410 including the movement state information. Note that the UE 100 (controller 120) may specify its own movement state using a GNSS or an acceleration sensor, or may specify (estimate) its own movement state based on the number of cell reselection per unit time.

For example, in the system information block, in a case where the TRS resource configuration #1 is "stationary", the TRS resource configuration #2 is "low speed", the TRS resource configuration #3 is "medium speed", and the TRS resource configuration #4 is "high speed", the UE 100 (controller 120) selects the TRS resource configuration #2 when the UE is moving at a low speed, and selects the TRS resource configuration #4 when the UE is moving at a high speed. Note that the TRS resource configuration #4 associated with "high speed" may be set such that the transmission cycle (periodicity) of the TRS is shorter than that of the TRS resource configuration #1 or #2 associated with "stationary" or "low speed".

The system information block (SIB) transmitted in step S201' may include reception state information indicating a reception state as condition information associated with each TRS resource configuration. The reception state information is information indicating received power or reception quality of the downlink reference signal, and may be, for example, binary information of poor/good, or information of poor/normal/good. In step S202', when the reception state of the UE 100 (controller 120) matches the reception state indicated by the reception state information in the system information block, the UE selects the TRS resource configuration associated with the condition information 410 including the reception state information. Note that the UE 100 (controller 120) may store the reception state when camped on the current cell, or may periodically measure the latest reception state.

For example, in the system information block, in a case where the TRS resource configuration #1 is "poor", the TRS resource configuration #2 is "normal", and the TRS resource configuration #3 is "good", the UE 100 (controller 120) selects the TRS resource configuration #1 when its own reception state is poor, and selects the TRS resource configuration #3 when its own reception state is good. Note that the TRS resource configuration #1 associated with "poor" may be set such that the power offset (powerControlOffsetSS) of the TRS is larger than that of the TRS resource configuration #3 associated with "good".

(Other Embodiments)

Also in the operation related to the selection of the TRS resource configuration described above, an example in which the shared TRS configuration parameter group is defined as one information element has been described. However, from the viewpoint of appropriately selecting the TRS resource configuration, the shared TRS configuration parameter group does not necessarily need to be defined. That is, the system information block may include a dedicated information element for each TRS resource configuration, and may not include an information element shared for two or more TRS resource configurations.

The operation sequence (and the operation flow) in the above-described embodiment may not necessarily be executed in time series according to the order described in the flow diagram or the sequence diagram. For example, the steps in the operation may be performed in an order different from the order described as the flow diagram or the sequence diagram, or may be performed in parallel. In addition, some of the steps in the operation may be removed and additional steps may be added to the processing. Furthermore, the operation sequence (and the operation flow) in the above-described embodiment may be performed separately and independently, or may be performed by combining two or more operation sequences (and operation flows). For example, some steps of one operation flow may be added to another operation flow, or some steps of one operation flow may be replaced with some steps of another operation flow.

In the above-described embodiments, a mobile communication system based on the NR is described as an example of the mobile communication system 1. However, the mobile communication system 1 is not limited to this example. The mobile communication system 1 may be a system conforming to a TS of any of LTE or another generation system (for example, the sixth generation) of the 3GPP standard. The base station 200 may be an eNB that provides evolved universal terrestrial radio access (E-UTRA) user plane and control plane protocol terminations towards the UE 100 in LTE. The mobile communication system 1 may be a system conforming to a TS defined in a standard other than the 3GPP standard. The base station 200 may be IAB (Integrated Access and Backhaul) or IAB node.

A program for causing a computer to execute each processing performed by the UE 100 or the base station 200 may be provided. The program may be recorded on a computer readable medium. The program can be installed in the computer by using the computer readable medium. Here, the computer readable medium on which the program is recorded may be a non-transitory recording medium. The non-transitory recording medium is not particularly limited, but may be, for example, a recording medium such as a CD-ROM or a DVD-ROM. In addition, a circuit that executes each processing performed by the UE 100 or the base station 200 may be integrated, and at least a part of the UE 100 or the base station 200 may be configured as a semiconductor integrated circuit (chipset, SoC).

In the above-described embodiment, "transmit (transmit)" may mean to perform processing of at least one layer in a protocol stack used for transmission, or may mean to physically transmit a signal wirelessly or by wire. Alternatively, "transmit" may mean a combination of performing the processing of at least one layer and physically transmitting a signal wirelessly or by wire. Similarly, "receive (receive)" may mean to perform processing of at least one layer in a protocol stack used for reception, or may mean to physically receive a signal wirelessly or by wire. Alternatively, "receive" may mean a combination of performing the processing of at least one layer and physically receiving a signal wirelessly or by wire. Similarly, "acquire (obtain/acquire)" may mean to acquire information from stored information, may mean to acquire information from information received from another node, or may mean to acquire the information by generating information. Similarly, "include (include)" and "comprise (comprise)" do not mean to include only the listed items, but mean that the terms may include only the listed items or may include additional items in addition to the listed items. Similarly, in the present disclosure, "or (or)" does not mean exclusive OR but means OR.

Although the present disclosure has been described in accordance with examples, it is understood that the present disclosure is not limited to the examples and structures. The present disclosure also includes various modifications and modifications within an equivalent range. In addition, various combinations and modes, and other combinations and modes including only one element, more elements, or less elements are also within the scope and idea of the present disclosure.

(Supplementary Note)

Features related to the above-described embodiment are additionally described.

(Supplementary Note 1)

A communication apparatus (100) that performs time and frequency synchronization in a downlink using a tracking reference signal (TRS), the communication apparatus (100) including:

a controller (120) configured to acquire, from a base station (200), a system information block (400) indicating a plurality of TRS resource configurations in a radio resource control (RRC) idle state or an RRC inactive state; and

16

a receiver (112) configured to receive the TRS from the base station (200) using a TRS resource configuration selected from the plurality of TRS resource configurations, in which

the system information block (400) includes, as separate information elements, a TRS configuration parameter group (402) shared for two or more TRS resource configurations, and a dedicated TRS configuration parameter group (403) that may have a different value for each TRS resource configuration.

(Supplementary Note 2)

The communication apparatus (100) according to Supplementary Note 1, in which the receiver (112) receives the TRS from the base station (200) by using the dedicated TRS configuration parameter group (403) corresponding to the selected TRS resource configuration and the shared TRS configuration parameter group (402) in combination.

(Supplementary Note 3)

The communication apparatus (100) according to Supplementary Note 1 or 2, in which the shared TRS configuration parameter group (402) includes at least one of a parameter indicating an occupation range of the TRS in a frequency direction, a parameter indicating a power offset of the TRS with respect to a synchronization signal, a parameter indicating periodicity and a time offset of the TRS, and a parameter related to QCL (Quasi Co-Location) of the TRS.

(Supplementary Note 4)

The communication apparatus (100) according to any one of Supplementary Notes 1 to 3, in which the dedicated TRS configuration parameter group (403) includes at least one of a parameter indicating allocation of the TRS in a frequency direction, a parameter indicating allocation of the TRS in a time direction, and a parameter indicating a scrambling identifier of the TRS.

(Supplementary Note 5)

The communication apparatus (100) according to any one of Supplementary Notes 1 to 4, in which

the system information block (400) comprises a plurality of sets of the shared TRS configuration parameter groups (402), and

each of the dedicated TRS configuration parameter groups (403) is associated with one set of shared TRS configuration parameter group (402) among the plurality of sets in the system information block (400).

(Supplementary Note 6)

The communication apparatus (100) according to any one of Supplementary Notes 1 to 5, in which the TRS is a reference signal that can be transmitted from the base station (200) to another communication apparatus (100) in an RRC connected state.

(Supplementary Note 7)

The communication apparatus (100) according to any one of Supplementary Notes 1 to 6, in which the system information block (400) includes condition information (410) that specifies a condition under which the communication apparatus (100) can select the dedicated TRS configuration parameter group (403) for each of the dedicated TRS configuration parameter groups (403).

(Supplementary Note 8)

A base station (200) used in a mobile communication system, the base station (200) including:

a transmitter (211) that transmits a tracking reference signal (TRS) used by a communication apparatus (100) for time and frequency synchronization in a downlink, and a system information block (400) indicating a plurality of TRS resource configurations, wherein

the system information block (400) includes, as separate information elements, a TRS configuration parameter group (402) shared for two or more TRS resource configurations, and a dedicated TRS configuration parameter group (403) that may have a different value for each TRS resource configuration.

(Supplementary Note 9)

A communication method used by a communication apparatus (100) that performs time and frequency synchronization in a downlink using a tracking reference signal (TRS), the communication method including:

a step (S101) of acquiring, from a base station (200), a system information block (400) indicating a plurality of TRS resource configurations in a radio resource control (RRC) idle state or an RRC inactive state; and
a step (S103) of receiving the TRS from the base station (200) using a TRS resource configuration selected from the plurality of TRS resource configurations, in which
the system information block (400) includes, as separate information elements, a TRS configuration parameter group (402) shared for two or more TRS resource configurations, and a dedicated TRS configuration parameter group (403) that may have a different value for each TRS resource configuration.

**Claims**

1. A communication apparatus (100), comprising:

   a receiver (112) configured to receive a system information block from a base station (200), the system information block including one or a plurality of tracking reference signal (TRS) resource configurations for the communication apparatus (100) in a radio resource control (RRC) idle state or an RRC inactive state, wherein the receiver (112) receives downlink control information (DCI) including a TRS field relating to availability of the one or the plurality of TRS resource configurations, from the base station (200), and the system information block further includes:

   information for configuring a correspondence between each TRS resource configuration in the one or the plurality of TRS resource configurations and a bit of the TRS information field indicating availability of the TRS resource configuration; and
   information for configuring a validity duration for the TRS field.

2. The communication apparatus (100) according to claim 1, wherein
   the number of bits of the TRS information field is determined based on the one or the plurality of TRS resource configurations.

3. The communication apparatus (100) according to claim 1, wherein
   the validity duration is indicated by the number of paging cycles.

4. The communication apparatus (100) according to claim 1, wherein
   the validity duration is initiated based on reception of the TRS information field.

5. The communication apparatus (100) according to claim 1, wherein
   a CRC parity bit scrambled by a P-RNTI is added to the downlink control information, and the downlink control information is received on a physical downlink control channel.

6. The communication apparatus (100) according to claim 1, wherein
   the TRS includes a channel state information reference signal (CSI-RS) for tracking.

7. The communication apparatus (100) according to claim 1, wherein
   one bandwidth part (BWP) is set in common for the one or the plurality of TRS resource configurations.

8. A communication control method executed in a communication apparatus (100), the communication control method comprising the steps of:

   receiving a system information block from a base station (200), the system information block including one or a plurality of tracking reference signal (TRS) resource configurations for the communication apparatus (100) in a radio resource control (RRC) idle state or an RRC inactive state; and

receiving downlink control information (DCI) including a TRS field relating to availability of the one or the plurality of TRS resource configurations, from the base station (200), wherein

the system information block further includes:

information for configuring a correspondence between each TRS resource configuration in the one or the plurality of TRS resource configurations and a bit of the TRS information field indicating availability of the TRS resource configuration; and

information for configuring a validity duration for the TRS field.

9. A base station (200) comprising:

a transmitter (211) configured to broadcast a system information block including one or a plurality of tracking reference signal (TRS) resource configurations for a communication apparatus (100) in a radio resource control (RRC) idle state or an RRC inactive state, wherein

the transmitter (211) transmits downlink control information (DCI) including a TRS field relating to availability of the one or the plurality of TRS resource configurations to the communication apparatus (100), and

the system information block further includes:

information for configuring a correspondence between each TRS resource configuration in the one or the plurality of TRS resource configurations and a bit of the TRS information field indicating availability of the TRS resource configuration; and

information for configuring a validity duration for the TRS field.

FIG. 1

# FIG. 2

EP 4 380 276 A1

# FIG. 3

BASE STATION
200

UE
(RRC CONNECTED)
100

UE-DEDICATED RRC SIGNALING
(CSI-RS/TRS RESOURCE CONFIGURATION) — S11

TRS/CSI-RS — S12

DATA — S13

# FIG. 4

BASE STATION
200

UE
(RRC IDLE/INACTIVE)
100

SSB                    S21

PAGING                 S22

# FIG. 5

BASE STATION
200

UE
(RRC IDLE/INACTIVE)
100

S31

SIB
(PLURALITY OF TRS RESOURCE CONFIGURATIONS)

S32

TRS

S33

PAGING

# FIG. 6

UE 100

COMMUNICATOR 110

TRANSMITTER 111

RECEIVER 112

CONTROLLER 120

# FIG. 7

BASE STATION 200

COMMUNICATOR 210

TRANSMITTER 211

RECEIVER 212

CONTROLLER 230

NETWORK INTERFACE 220

EP 4 380 276 A1

FIG. 8

# FIG. 9

**SIBXX information element**

```
SIBXX-r17 ::=                              SEQUENCE {
    nzp-CSI-RS-ResourceSetListForTracking-r17   SEQUENCE (SIZE (1..maxNrofNZP-CSI-RS-ResourceSets)) OF NZP-CSI-RS-    401A
ResourceSetSIB-r17    OPTIONAL, -- Need R
    nzp-CSI-RS-ResourceListForTracking-r17      SEQUENCE (SIZE (1..maxNrofNZP-CSI-RS-Resources)) OF NZP-CSI-RS-ResourceSIB-r17
        OPTIONAL, -- Need R
    nzp-CSI-RS-ResourceCommon-r17              NZP-CSI-RS-ResourceCommon-r17,
    ...                                                                                          401B
}                                                                    402              403A

NZP-CSI-RS-ResourceSetSIB-r17 ::=          SEQUENCE {
    nzp-CSI-ResourceSetId-r17               NZP-CSI-RS-ResourceSetId,
    nzp-CSI-RS-Resources-r17                SEQUENCE (SIZE (1..maxNrofNZP-CSI-RS-ResourcesPerSet)) OF NZP-CSI-RS-ResourceId,
    ...,
}

NZP-CSI-RS-ResourceSIB-r17 ::=             SEQUENCE {            403B
    nzp-CSI-RS-ResourceId                   NZP-CSI-RS-ResourceId,
    frequencyDomainAllocation               BIT STRING (SIZE (4)),
    firstOFDMSymbolInTimeDomain             INTEGER (0..9),
    scramblingID                            ScramblingId,
    ...
}

                                                                                              402
NZP-CSI-RS-ResourceCommon-r17 ::=          SEQUENCE {
    csi-FrequencyOccupation-r17             CSI-FrequencyOccupation,
    powerControlOffsetSS-r17                ENUMERATED{db-3, db0, db3, db6}              OPTIONAL,    -- Need R
    periodicityAndOffset-r17                CSI-ResourcePeriodicityAndOffsetSIB-r17,
    qcl-InfoForTracking-r17                 SEQUENCE {
                                            refernceSignal-r17      SSB-Index,
                                            qcl-Type-r17            ENUMERATED {typeA, typeB, typeC, typeD}
    }                                                               OPTIONAL,    -- Need R
    ...
}
```

| SIBXX field descriptions |
|---|
| nzp-CSI-RS-ResourceCommon |
| Set of common parameters applicable to all NZP-CSI-RS-ResourceSIBs in nzp-CSI-RS-ResourceListForTracking. |
| nzp-CSI-RS-ResourceSetListForTracking |
| List of NZP-CSI-RS-ResourceSetSIB for tracking. |
| nzp-CSI-RS-ResourceListForTracking |
| List of NZP-CSI-RS-ResourceSIB for tracking. |

FIG. 10

| frequencyDomainAllocation<br>Frequency domain allocation within a physical resource block in accordance with TS 38.211 [16], clause 7.4.1.5.3. The applicable row number in table 7.4.1.5.3-1 is determined by the *frequencyDomainAllocation* for rows 1, 2 and 4, and for other rows by matching the values in the column Ports, Density and CDMtype in table 7.4.1.5.3-1 with the values of *nrofPorts*, *cdm-Type* and density below and, when more than one row has the 3 values matching, by selecting the row where the column (k bar, l bar) in table 7.4.1.5.3-1 has indexes for k ranging from 0 to 2*n-1 where n is the number of bits set to 1 in *frequencyDomainAllocation*. |
| :--- |
| firstOFDMSymbolInTimeDomain<br>Time domain allocation within a physical resource block. The field indicates the first OFDM symbol in the PRB used for CSI-RS. See TS 38.211 [16], clause 7.4.1.5.3. Value 2 is supported only when *dmrs-TypeA-Position* equals *pos3*. |
| scramblingID<br>Scrambling ID (see TS 38.214 [19], clause 5.2.2.3.1). |

## FIG. 11

**The IE** *CSI-FrequencyOccupation* is used to configure the frequency domain occupation of a channel state information measurement resource (e.g. *NZP-CSI-RS-Resource*, *CSI-IM-Resource*).

```
CSI-FrequencyOccupation ::=        SEQUENCE {
   startingRB                 INTEGER (0..maxNrofPhysicalResourceBlocks-1),
   nrofRBs                    INTEGER (24..maxNrofPhysicalResourceBlocksPlus1),
   ...
}
```

*powerControlOffsetSS*
Power offset of NZP CSI-RS RE to SSS RE. Value in dB (see TS 38.214 [19], clause 5.2.2.3.1).

*periodicityAndOffset*
Periodicity and slot offset *sl1* corresponds to a periodicity of 1 slot, *sl2* to a periodicity of two slots, and so on. The corresponding offset is also given in number of slots (see TS 38.214 [19], clause 5.2.2.3.1). Network always configures the UE with a value for this field for periodic and semi-persistent NZP-CSI-RS-Resource (as indicated in *CSI-ResourceConfig*).

**The IE** *CSI-ResourcePeriodicityAndOffset* is used to configure a periodicity and a corresponding offset for periodic and semi-persistent CSI resources, and for periodic and semi-persistent reporting on PUCCH. both, the periodicity and the offset are given in number of slots. The periodicity value *slots4* corresponds to 4 slots, value *slots5* corresponds to 5 slots, and so on.

```
CSI-ResourcePeriodicityAndOffsetSIB-r17 ::=    CHOICE {
   slots10-r17                  INTEGER (0..9),
   slots20-r17                  INTEGER (0..19),
   slots40-r17                  INTEGER (0..39),
   slots80-r17                  INTEGER (0..79),
   slots160-r17                  INTEGER (0..159),
   slots320-r17                  INTEGER (0..319),
   slots640-r17                  INTEGER (0..639)
}
```

# FIG. 12

BASE STATION  200

↓ PAGING

PAGING GROUP

PAGING SUBGROUP #1

100

| UE | UE | UE |

PAGING SUBGROUP #2

| UE | UE | UE |

PAGING SUBGROUP #3

| UE | UE | UE |

# FIG. 13

BASE STATION
200

UE
(RRC IDLE/INACTIVE)
100

EACH TRS RESOURCE CONFIGURATION INCLUDES
CONDITION INFORMATION (PAGING SUBGROUP ID)

S201

SIB
(N TRS RESOURCE CONFIGURATIONS)

S202

SELECT TRS RESOURCE CONFIGURATION
SATISFYING CONDITIONS

S203

TRS

S204

PAGING

EP 4 380 276 A1

# FIG. 14

## *SIBXX* information element ⟋400

```
SIBXX-r17 ::=                            SEQUENCE {
    nzp-CSI-RS-ResourceSetListForTracking-r17  SEQUENCE (SIZE (1..maxNrofNZP-CSI-RS-ResourceSets)) OF NZP-CSI-RS-
ResourceSetSIB-r17   OPTIONAL, -- Need R                                                                         401A
    nzp-CSI-RS-ResourceListForTracking-r17     SEQUENCE (SIZE (1..maxNrofNZP-CSI-RS-Resources)) OF NZP-CSI-RS-ResourceSIB-r17
        OPTIONAL, -- Need R
    nzp-CSI-RS-ResourceCommon-r17                NZP-CSI-RS-ResourceCommon-r17,
    ...                                                                          402              403A'         401B
}

NZP-CSI-RS-ResourceSetSIB-r17 ::=            SEQUENCE {
    nzp-CSI-ResourceSetId-r17                NZP-CSI-RS-ResourceSetId,          410
    pagingSubGroupId-r17                     INTEGER (0..7),
    nzp-CSI-RS-Resources-r17                 SEQUENCE (SIZE (1..maxNrofNZP-CSI-RS-ResourcesPerSet)) OF NZP-CSI-RS-ResourceId,
    ...,
}

NZP-CSI-RS-ResourceSIB-r17 ::=              SEQUENCE {                          403B
    nzp-CSI-RS-ResourceId                    NZP-CSI-RS-ResourceId,
    frequencyDomainAllocation               BIT STRING (SIZE (4)),
    firstOFDMSymbolInTimeDomain             INTEGER (0..9),
    scramblingID                            ScramblingId,
    ...
}

NZP-CSI-RS-ResourceCommon-r17 ::=           SEQUENCE {                          402
    csi-FrequencyOccupation-r17             CSI-FrequencyOccupation,
    powerControlOffsetSS-r17                ENUMERATED{db-3, db0, db3, db6}            OPTIONAL,   -- Need R
    periodicityAndOffset-r17                CSI-ResourcePeriodicityAndOffsetSIB-r17,
    qcl-InfoForTracking-r17                 SEQUENCE {
    refernceSignal-r17             SSB-Index,
    qcl-Type-r17                   ENUMERATED {typeA, typeB, typeC, typeD}
    }                                       OPTIONAL,   -- Need R
}
```

| SIBXX field descriptions |
|---|
| nzp-CSI-RS-ResourceCommon |
| Set of common parameters applicable to all NZP-CSI-RS-ResourceSIBs in nzp-CSI-RS-ResourceListForTracking. |
| nzp-CSI-RS-ResourceSetListForTracking |
| List of NZP-CSI-RS-ResourceSetSIB for tracking. |
| nzp-CSI-RS-ResourceListForTracking |
| List of NZP-CSI-RS-ResourceSIB for tracking. |
| pagingSubGroupid |
| ID of paging sub-group associated with this NZP-CSI-RS-ResourceSetSIB. The UE selects the NZP-CSI-RS resource set for receiving the tracking RS, based on the paging sub-group ID to which the UE belongs. If the paging sub-group is not assigned ot th UE, the UE selects the NZP-CSI-RS resource set, according to the following condition. UE_ID mod n = nzp-CSI-ResourceSetId where: UE_ID, as defined in TS 38.304; n: number of NZP-CSI-RS-ResourceSetSIBs in nzp-CSI-RS-ResourceSetListForTracking |

EP 4 380 276 A1

# FIG. 15

BASE STATION
200

UE
(RRC IDLE/INACTIVE)
100

M (M<N): SHARED TRS CONFIGURATION PARAMETER GROUPS
N: DEDICATED TRS CONFIGURATION PARAMETER GROUPS

S101'

SIB
(N TRS RESOURCE CONFIGURATIONS)

S102'

SELECT TRS RESOURCE CONFIGURATION

S103

TRS

S104

PAGING

EP 4 380 276 A1

# FIG. 16

**SIBXX** information element  ⟋ 400

```
SIBXX-r17 ::=                              SEQUENCE {                                                                           ⟋401A
    nzp-CSI-RS-ResourceSetListForTracking-r17   SEQUENCE (SIZE (1..maxNrofNZP-CSI-RS-ResourceSets)) OF NZP-CSI-RS-           ⟋401B
ResourceSetSIB-r17    OPTIONAL, -- Need R
    nzp-CSI-RS-ResourceListForTracking-r17       SEQUENCE (SIZE (1..maxNrofNZP-CSI-RS-Resources)) OF NZP-CSI-RS-ResourceSIB-r17
        OPTIONAL, -- Need R
    nzp-CSI-RS-ResourceCommonList-r17            SEQUENCE (SIZE (1..maxNrofNZP-CSI-RS-ResourceCommons)) OF NZP-CSI-RS-
ResourceCommon-r17,
    ...
}                                                                                      ⟋403A                       402A

NZP-CSI-RS-ResourceSetSIB-r17 ::=          SEQUENCE {
    nzp-CSI-ResourceSetId-r17                  NZP-CSI-RS-ResourceSetId,
    nzp-CSI-RS-Resources-r17                   SEQUENCE (SIZE (1..maxNrofNZP-CSI-RS-ResourcesPerSet)) OF NZP-CSI-RS-ResourceId,
    ...,
}

NZP-CSI-RS-ResourceSIB-r17 ::=             SEQUENCE {                               ⟋403B'
    nzp-CSI-RS-ResourceId-r17                  NZP-CSI-RS-ResourceId,
    frequencyDomainAllocation-r17             BIT STRING (SIZE (4)),
    firstOFDMSymbolInTimeDomain-r17           INTEGER (0..9),
    scramblingID-r17                          ScramblingId,
    nzp-CSI-RS-ResourceCommonId-r17           NZP-CSI-RS-ResourceCommonId-r17,
    ...
}
                                                                                                                   ⟋402B
NZP-CSI-RS-ResourceCommon-r17 ::=          SEQUENCE {
    nzp-CSI-RS-ResourceCommonId-r17            NZP-CSI-RS-ResourceCommonId-r17,
    csi-FrequencyOccupation-r17               CSI-FrequencyOccupation,
    powerControlOffsetSS-r17                  ENUMERATED{db-3, db0, db3, db6}                OPTIONAL,    -- Need R
    periodicityAndOffset-r17                  CSI-ResourcePeriodicityAndOffsetSIB-r17,
    qcl-InfoForTracking-r17                   SEQUENCE {
                                              refernceSignal-r17            SSB-Index,
                                              qcl-Type-r17                  ENUMERATED {typeA, typeB, typeC, typeD}
                                                                            OPTIONAL,    -- Need R
    }
    ...
}

NZP-CSI-RS-ResourceCommonId-r17 ::=        INTEGER (0..maxNrofNZP-CSI-RS-ResourceCommonId-1-r17)
```

EP 4 380 276 A1

# FIG. 17

**SIBXX information element** ⟿ 400

```
SIBXX-r17 ::=                          SEQUENCE {                                                                401A
    nzp-CSI-RS-ResourceSetListForTracking-r17  SEQUENCE (SIZE (1..maxNrofNZP-CSI-RS-ResourceSets)) OF NZP-CSI-RS-
ResourceSetSIB-r17    OPTIONAL, -- Need R                                                                        401B
    nzp-CSI-RS-ResourceListForTracking-r17     SEQUENCE (SIZE (1..maxNrofNZP-CSI-RS-Resources)) OF NZP-CSI-RS-ResourceSIB-r17
        OPTIONAL, -- Need R
    nzp-CSI-RS-ResourceCommonList-r17          SEQUENCE (SIZE (1..maxNrofNZP-CSI-RS-ResourceCommons)) OF NZP-CSI-RS-
ResourceCommon-r17,
    ...                                                                                              403A'
}                                                                                                               402A

NZP-CSI-RS-ResourceSetSIB-r17 ::=          SEQUENCE {
    nzp-CSI-ResourceSetId-r17               NZP-CSI-RS-ResourceSetId,
    nzp-CSI-RS-Resources-r17                SEQUENCE (SIZE (1..maxNrofNZP-CSI-RS-ResourcesPerSet)) OF NZP-CSI-RS-ResourceId,
    nzp-CSI-RS-ResourceCommonId-r17         NZP-CSI-RS-ResourceCommonId-r17,
    ...,
}

NZP-CSI-RS-ResourceSIB-r17 ::=             SEQUENCE {                              403B
    nzp-CSI-RS-ResourceId-r17               NZP-CSI-RS-ResourceId,
    frequencyDomainAllocation-r17           BIT STRING (SIZE (4)),
    firstOFDMSymbolInTimeDomain-r17         INTEGER (0..9),
    scramblingID-r17                        ScramblingId,
    ...
}
                                                                                              402B
NZP-CSI-RS-ResourceCommon-r17 ::=          SEQUENCE {
    nzp-CSI-RS-ResourceCommonId-r17         NZP-CSI-RS-ResourceCommonId-r17,
    csi-FrequencyOccupation-r17             CSI-FrequencyOccupation,
    powerControlOffsetSS-r17                ENUMERATED{db-3, db0, db3, db6}          OPTIONAL,   -- Need R
    periodicityAndOffset-r17                CSI-ResourcePeriodicityAndOffsetSIB-r17,
    qcl-InfoForTracking-r17                 SEQUENCE {
                                            refernceSignal-r17         SSB-Index,
                                            qcl-Type-r17               ENUMERATED {typeA, typeB, typeC, typeD}
    }                                                                  OPTIONAL,   -- Need R
    ...
}

NZP-CSI-RS-ResourceCommonId-r17 ::=        INTEGER (0..maxNrofNZP-CSI-RS-ResourceCommonId-1-r17)
```

EP 4 380 276 A1

# FIG. 18

## INTERNATIONAL SEARCH REPORT

| International application No. |
|---|
| **PCT/JP2022/028941** |

| A. | CLASSIFICATION OF SUBJECT MATTER |
|---|---|

*H04W 72/04*(2009.01)i; *H04W 48/10*(2009.01)i; *H04W 72/12*(2009.01)i
FI:　H04W72/04 136; H04W72/12 130; H04W48/10

According to International Patent Classification (IPC) or to both national classification and IPC

| B. | FIELDS SEARCHED |
|---|---|

Minimum documentation searched (classification system followed by classification symbols)

H04W72/04; H04W48/10; H04W72/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CATT. Configuration of TRS/CSI-RS for paging enhancement[online]. 3GPP TSG RAN WG1 #105-e R1-2104533. 12 May 2021<br>chapter 1-2 | 1-9 |
| Y | HUAWEI, HISILICON. Assistance RS occasions for IDLE/inactive mode[online]. 3GPP TSG RAN WG1 #105-e R1-2104252. 12 May 2021<br>chapter 2-3 | 1-9 |
| Y | WO 2020/121414 A1 (NTT DOCOMO, INC.) 18 June 2020 (2020-06-18)<br>paragraph [0032] | 5-7 |
| A | Moderator (SAMSUNG). 1st Summary for TRS/CSI-RS occasion(s) for idle/inactive UEs[online]. 3GPP TSG RAN WG1 #105-e R1-2105323.<br>entire text | 1-9 |

☐ Further documents are listed in the continuation of Box C.　　☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 September 2022** | **13 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/028941**

| Patent document cited in search report | Publication date (day/month/year) | Patent family member(s) | Publication date (day/month/year) |
|---|---|---|---|
| WO 2020/121414 A1 | 18 June 2020 | US 2022/0039138 A1 paragraph [0040] <br> CN 113396598 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021125799 A

**Non-patent literature cited in the description**

- Discussion on TRS/CSI-RS occasion(s) for idle/inactive UEs. *3GPP Contribution RP-2105435*